# EUROPEAN PATENT APPLICATION

(11) **EP 4 682 720 A1**
(43) Date of publication of application: **21.01.2026**
(21) Application number: 24796153.5
(22) Date of filing: 25.04.2024
(51) Int. Cl.: G06F 9/50

(54) **DEVICE RESOURCE MANAGEMENT METHOD, RELATED SYSTEM, AND STORAGE MEDIUM**

(30) Priority: 27.04.2023 CN 202310480011; 30.08.2023 CN 202311128158
(71) Applicant: Huawei Technologies Co., Ltd., Shenzhen, Guangdong 518129 (CN)
(72) Inventor: GUO, Jian, Shenzhen, Guangdong 518129 (CN); QIU, Zhenfa, Shenzhen, Guangdong 518129 (CN); HAN, Zhaojiao, Shenzhen, Guangdong 518129 (CN)
(74) Representative: Huawei European IPR
(86) International application number: PCT/CN2024/089740
(87) International publication number: WO 2024/222777

(57) **Abstract**

This application discloses a device resource management method, a related system, and a storage medium. The system may include at least one user host, at least one resource device, and a management host. Each resource device includes a first entity, at least one second entity, where a total of N second entities are included. The first entity includes a physical configuration resource, and the one or more second entities include a function configuration resource generated after the physical configuration resource is configured. The management host allocates, according to a resource allocation policy, the N second entities to the at least one user host for use, and the target user host obtains L allocated second entities. The target user host registers the L second entities and uses the L second entities. In this application, allocation can be performed for different user hosts based on second entities in the resource device, thereby providing a finer resource allocation granularity, higher resource utilization, and greater flexibility resource allocation.

## Description

This application claims priorities to Chinese Patent Application No. 202310480011.3, filed with the China National Intellectual Property Administration on April 27, 2023 and entitled "DEVICE RESOURCE MANAGEMENT METHOD, RELATED SYSTEM, AND STORAGE MEDIUM", and to Chinese Patent Application No. 202311128158.2, filed with the China National Intellectual Property Administration on August 30, 2023 and entitled "DEVICE RESOURCE MANAGEMENT METHOD, RELATED SYSTEM, AND STORAGE MEDIUM", both of which are incorporated herein by reference in their entireties.

### TECHNICAL FIELD

This application relates to the field of computer technologies, and in particular, to a device resource management method, a related system, and a storage medium.

### BACKGROUND

With the continuous development of computer technologies, applications in various industries are emerging, and massive data is impacting the entire data center industry with an unprecedented growth trend. In view of this, data center builders are compelled to re-examine an information technology (information technology, IT) system architecture from a new perspective. Conventional rack-mounted servers have struggled to deal with large-scale service models. For example, when resource-intensive applications are running, the conventional rack-mounted servers are inefficient, and server density (for example, a quantity of servers per unit space) is negatively affected. In addition, conventional rack-mounted servers face the issue of asynchronous life cycles among different types of resources. For example, central processing units (central processing unit, CPU) develop fastest, with performance doubling every two to three years, while storage technologies advance relatively slowly. When a conventional rack-mounted server needs to be decommissioned due to inadequate storage capabilities, its CPU may still meet requirements. However, the CPU still needs to be decommissioned together with the conventional rack-mounted server due to the storage limitations, leading to a waste of CPU performance and power consumption.

To resolve the foregoing problems, a plurality of companies in the industry have begun researching new server architectures. Examples include Intel (Intel)'s rack scale architecture (rack scale architecture, RSA), and Google (Google)'s collaboration with UC Berkeley on warehouse scale computer (warehouse scale computer, WSC). They all chose a same direction, namely, server resource pooling technology. The idea of the resource pooling technology is to pool several critical resources of servers, for example, CPU pools, memory pools, storage pools, and I/O pools. A pooling model may be used to facilitate management and expansion, and reduce operational and maintenance costs. However, from the perspective of operating systems (operating system, OS) or service software, the architecture is still a conventional server that includes a CPU, a memory, a hard disk, a network interface card, and the like. However, a big challenge faced by the resource pooling technology is how to provide resources for a plurality of user hosts for use, that is, how to determine resource configuration and management solutions, for example, how to discover, record, allocate, and reclaim resources.

Currently, resource management solutions for the resource pooling technology are still under research.

### SUMMARY

Embodiments of this application provide a device resource management method, a related system, and a storage medium, so that a plurality of user hosts can share resources of a single resource device after resource pooling of a resource device. In addition, an allocation granularity of device resources is finer, resource utilization is higher, and resources can be flexibly allocated based on requirements of user hosts.

According to a first aspect, an embodiment of this application provides a device resource management method, applied to a management host in a device resource management system. The device resource management system further includes at least one user host and at least one resource device, each of the at least one resource device includes a first entity and at least one second entity, the first entity includes a physical configuration resource, the at least one second entity includes a function configuration resource generated after the physical configuration resource is configured, the at least one resource device includes N second entities in total, and N is an integer greater than 1. The method includes: obtaining a resource allocation policy, where the resource allocation policy is used to determine to allocate L second entities in the N second entities to a target user host in the at least one user host, and L is an integer less than or equal to N; and sending first configuration information to the target user host, where the first configuration information is used to notify the target user host to register the L second entities.

In conventional technologies, a PCIe device is modeled as a physical function (PF) + a virtual function (VF). The PCIe device is discovered, managed, and allocated with physical functions (including full PCIe functionality) as a minimum granularity. Therefore, allocation of a resource device in conventional technologies is at a PF-level granularity. Consequently, a plurality of VFs created by a PF can only be allocated to a single user host for use, an allocation granularity is coarse, resource allocation is not flexible, and resource utilization is low. Embodiments of this application provide a management system of a resource device based on a model in which a physical configuration resource and a function configuration resource (namely, the first entity + one or more second entities) are separated. The management host in the system may allocate the second entity, as a minimum resource allocation granularity, of the resource device to different user hosts in the system according to the resource allocation policy, and the user hosts may register allocated second entities and use the second entities, that is, the management host may perform resource discovery, management, and allocation at a granularity of second entities of the resource device. The second entity in embodiments of this application includes the function configuration resource, namely, a VF-level resource, of the resource device. Therefore, in comparison with the conventional technologies in which resource allocation performed at a PF level, embodiments of this application perform resource allocation at a granularity of second entities. This application has a finer an allocation granularity, and higher resource utilization. In addition, the plurality of second entities corresponding to the first entity may be allocated to different user hosts for use, so that resource allocation is more flexible.

In a possible implementation, the method further includes: scanning the device resource management system, to discover the at least one user host and the at least one resource device.

In embodiments of this application, before obtaining the resource allocation policy, the management host may first scan the device resource management system, to discover all user hosts and resource devices in the system. This lays foundations for allocating resources of the resource device to user hosts.

In a possible implementation, the scanning the device resource management system, to discover the at least one user host and the at least one resource device includes: sending an enumeration message in the device resource management system, where the enumeration message is used to discover devices in the device resource management system; receiving enumeration response messages separately sent by the at least one user host and the at least one resource device for the enumeration message; and determining the at least one user host and the at least one resource device based on the enumeration response messages.

In embodiments of this application, after sending the enumeration message in the system, the management host may receive the enumeration response message sent by each user host and each resource device in the system for the enumeration message, and may further discover each user host and each resource device in the system, to obtain information about each device. This is the premise for subsequent resource allocation.

In a possible implementation, the obtaining the resource allocation policy includes: obtaining a resource requirement of the target user host in the at least one user host; and determining the resource allocation policy based on the resource requirement.

In embodiments of this application, the resource allocation policy of the management host may be determined based on the resource requirement of the target user host, so that resource allocation is performed based on the requirement. This improves resource allocation flexibility and resource utilization.

In a possible implementation, the method further includes: configuring entity identifiers and/or permission identifiers for the L second entities.

In embodiments of this application, after discovering each resource device through scanning, the management host may obtain device information of each resource device. To facilitate resource allocation and for the purpose of resource use security, the management host may configure entity identifiers and/or permission identifiers for second entities in each resource device. This helps user hosts distinguish between different second entities and confirm access permission of the second entity.

In a possible implementation, the first configuration information includes one or more of the following items: globally unique identifiers, entity identifiers, or permission identifiers of the L second entities.

In embodiments of this application, when notifying, via the first configuration information, the target user host to register the L allocated second entities, the management host may configure one or more of the following items: globally unique identifiers, the entity identifiers, or the permission identifiers of the second entities in the first configuration information, so that the target user host can distinguish between different second entities or determine access permission of the second entity based on the information.

In a possible implementation, the method further includes: sending second configuration information to the target user host, where the second configuration information is used to notify the target user host to deregister one or more second target entities in the L second entities.

In embodiments of this application, after allocating the L second entities of the at least one resource device to the target user host, the management host may notify, via the second configuration information, the target user host to deregister a part or all of the second entities, to reclaim allocated resources. This facilitates subsequent allocation of these second entities to another user host.

In a possible implementation, the second configuration information includes one or more of the following items: globally unique identifiers, entity identifiers, or permission identifiers of the one or more second target entities.

In embodiments of this application, when notifying, via the second configuration information, the target user host to deregister the part or all of the L allocated second entities, the management host may configure one or more of the following items: globally unique identifiers, the entity identifiers, or the permission identifiers of the second entities in the second configuration information, so that the target user host can distinguish between different second entities or determine access permission of the second entity based on the information.

In a possible implementation, the sending the second configuration information to the target user host includes: when the resource allocation policy changes, sending the second configuration information to the target user host; or when the one or more second target entities or a resource device to which the one or more second target entities belong is faulty, sending the second configuration information to the target user host.

In embodiments of this application, when the resource allocation policy changes, or the allocated second entity is faulty, or the resource device to which the second entities belong is faulty, the management host may notify, via the second configuration information, the target user host to deregister the second entity, to ensure that resources in the system can be normally allocated and used.

In a possible implementation, the method further includes: when the resource allocation policy changes, resetting the one or more second target entities, and clearing the entity identifiers and/or the permission identifiers of the one or more second target entities.

In embodiments of this application, when the resource allocation policy changes, the management host may reset the one or more second entities that need to be reclaimed, and clear the entity identifiers and/or the permission identifiers of the one or more second entities, to facilitate subsequent allocation of these resources to another user host.

In a possible implementation, the method further includes: configuring a network address for a physical port of the target user host. Sending the first configuration information to the target user host includes: sending the first configuration information to the target user host based on the network address of the physical port of the target user host.

In embodiments of this application, after discovering each device in the system through scanning, the management host may configure the network address for the physical port of the target user host, and communication messages of the management host and the target user host may be subsequently routed and transmitted based on the network address. Different from conventional technologies, embodiments of this application do not need to perform complex table query and translation based on a memory (memory) address, to reduce a delay and bandwidth overheads.

According to a second aspect, an embodiment of this application provides a device resource management method, applied to a target user host in a device resource management system. The device resource management system includes a management host, at least one user host, and at least one resource device, the target user host is one of the at least one user host, each of the at least one resource device includes a first entity and at least one second entity, the first entity includes a physical configuration resource, the at least one second entity includes a function configuration resource generated after the physical configuration resource is configured, the at least one resource device includes N second entities in total, and N is an integer greater than 1. The method includes: receiving first configuration information sent by the management host; determining L allocated second entities based on the first configuration information, where the L second entities are a part or all of the N second entities, and L is a positive integer less than or equal to N; and registering the L second entities.

In embodiments of this application, the management host may allocate the N second entities of the at least one resource device to the at least one user host for use, determine to allocate the L second entities to the target user host for use, and send the first configuration information. The target user host may determine, based on the received first configuration information, the L allocated second entities, and then register and use the second entities. In other words, the management host may perform resource discovery, management, and allocation at a granularity of second entities of the resource device. The second entity in embodiments of this application includes the function configuration resource, namely, a VF-level resource, of the resource device. Therefore, in comparison with the conventional technologies in which resource allocation performed at a PF-level, embodiments of this application perform resource allocation at a granularity of second entities. This application has a finer allocation granularity, and higher resource utilization. In addition, the plurality of second entities corresponding to the first entity may be allocated to different user hosts for use, so that resource allocation is more flexible.

In a possible implementation, the registering the L second entities includes: creating local devices for the L second entities; and loading device drivers for the local devices, and establishing communication channels from the local devices to the L second entities by using the device drivers.

In a possible implementation, the method further includes: enabling and using the L second entities.

In a possible implementation, the method further includes: receiving an enumeration message sent by the management host; and sending an enumeration response message to the management host for the enumeration message.

In a possible implementation, the method further includes: sending a resource requirement to the management host.

In a possible implementation, the method further includes: receiving second configuration information sent by the management host; determining one or more to-be-deregistered second target entities in the L second entities based on the second configuration information; and deregistering the one or more second target entities.

In a possible implementation, the deregistering the one or more second target entities includes: unloading device drivers loaded for local devices, where the local devices are device nodes created for the one or more second target entities; and deleting the local devices.

In a possible implementation, the second configuration information includes one or more of the following items: globally unique identifiers, entity identifiers, or permission identifiers of the one or more second target entities.

In a possible implementation, the first configuration information includes one or more of the following items: globally unique identifiers, entity identifiers, or permission identifiers of the L second entities.

According to a third aspect, an embodiment of this application provides a device resource management method, applied to a resource device in a device resource management system. The device resource management system further includes a management host. The method includes: receiving an enumeration message sent by the management host, where the enumeration message is used to discover a device in the device resource management system; and sending an enumeration response message to the management host for the enumeration message, where the enumeration response message is used to report information about the resource device.

In a possible implementation, the enumeration response message includes a globally unique identifier of a target resource device.

According to a fourth aspect, an embodiment of this application provides a device resource management system. The system includes at least one user host, at least one resource device, and a management host, each of the at least one resource device includes a first entity and at least one second entity, the first entity includes a physical configuration resource, the at least one second entity includes a function configuration resource generated after the physical configuration resource is configured, the at least one resource device includes at least one first entity and N second entities in total, and N is an integer greater than 1. The management host is configured to obtain a resource allocation policy, and allocate, according to the resource allocation policy and a requirement, the N second entities to the at least one user host for use. The target user host obtains L allocated second entities, the L second entities correspond to Q first entities in the at least one first entity, the target user host is any one of the at least one user host, and L is a positive integer less than or equal to N. The target user host is configured to register the L second entities.

In a possible implementation, the management host is further configured to scan the device resource management system, to discover the at least one user host and the at least one resource device.

In a possible implementation, the management host is specifically configured to: send an enumeration message in the device resource management system, and receive enumeration response messages separately sent by the at least one user host and the at least one resource device for the enumeration message; and determine the at least one user host and the at least one resource device based on the enumeration response messages. The at least one user host and the at least one resource device are configured to receive the enumeration message, and send the enumeration response message to the management host for the enumeration message.

In a possible implementation, the management host is specifically configured to obtain a resource requirement of the target user host in the at least one user host, and determine the resource allocation policy based on the resource requirement. The target user host is configured to send the resource requirement to the management host.

In a possible implementation, the management host is further configured to configure entity identifiers and/or permission identifiers for the L second entities.

In a possible implementation, the management host is further configured to send the first configuration information to the target user host. The first configuration information is used to notify the target user host to register the L second entities, and the first configuration information includes one or more of the following items: globally unique identifiers, entity identifiers, or permission identifiers of the L second entities. The target user host is configured to: receive the first configuration information sent by the management host; determine the L allocated second entities based on the first configuration information, where the L second entities are a part or all of the N second entities, and L is a positive integer less than or equal to N; and register the L second entities.

In a possible implementation, the management host is further configured to send second configuration information to the target user host. The second configuration information is used to notify the target user host to deregister one or more second target entities in the L second entities, and the second configuration information includes one or more of the following items: globally unique identifiers, entity identifiers, or permission identifiers of the one or more second target entities. The target user host is further configured to: receive the second configuration information sent by the management host; determine the one or more to-be-deregistered second target entities in the L second entities based on the second configuration information; and deregister the one or more second target entities.

In a possible implementation, the management host is specifically configured to: when the resource allocation policy changes, send the second configuration information to the target user host; or when the one or more second target entities or a resource device to which the one or more second target entities belong is faulty, send the second configuration information to the target user host.

In a possible implementation, the management host is further configured to: when the resource allocation policy changes, reset the one or more second target entities, and clear the entity identifiers and/or the permission identifiers of the one or more second target entities.

In a possible implementation, a target resource device in the at least one resource device includes P second entities in the N second entities. The management host is specifically configured to allocate the P second entities to the at least one user host for use. The L second entities allocated to the target user host include a part or all of the P second entities, and the L second entities are from a same resource device or different resource devices in the at least one resource device.

In embodiments of this application, when allocating second entities included in a plurality of resource devices in the system, the management host may allocate the second entities included in the target resource device to a plurality of user hosts in the system for use. The target resource device may be any one or more of the plurality of resource devices, so that one or more second entities that meet a requirement are allocated to the target user host in the plurality of user hosts. The second entities that meet the requirement may be provided by one resource device, or may be provided by different resource devices, to further improve flexibility of resource allocation.

In a possible implementation, the management host is specifically configured to: when P is equal to 1, allocate the P second entities to the target user host for use; or when P is equal to 1, allocate, in a first period of time, the P second entities to the target user host for use, and allocate, in a second period of time, the P second entities to another user host for use. The another user host is a user host other than the target user host in the at least one user host.

In embodiments of this application, the management host allocates the P second entities included in the target resource device to the plurality of user hosts in the system for use. If P is 1, the management host may allocate the P second entities to the target user host for use; or allocate, in a period of time, the P second entities to the target user host for use, and allocate, in another period of time after the target user host uses the P second entities, the P second entities to another user host for use. This further improves resource utilization.

In a possible implementation, the management host is specifically configured to: when P is greater than 1, allocate the P second entities to the target user host for use; or when P is greater than 1, allocate S second entities in the P second entities to the target user host for use, and allocate a part or all of the other (P-S) second entities in the P second entities to another user host for use. The another user host is a user host other than the target user host in the at least one user host.

In embodiments of this application, when the management host allocates the P second entities included in the target resource device to the plurality of user hosts in the system for use, if P is greater than 1, the management host may allocate all the P second entities to the target user host for use; or allocate a part of the P second entities to the target user host for use, and allocate another part of second entities to another user host for use. This further improves resource allocation flexibility and resource utilization.

In a possible implementation, the system further includes: a switch device, configured to connect the at least one user host, the management host, and the at least one resource device.

In embodiments of this application, the switch device is added, so that the devices in the device resource management system can be connected via the switch device. The switch device can provide a large quantity of ports, and the at least one user host, the management host, and the at least one resource management host may not be directly connected. This saves and protects physical ports of the devices, facilitates an increase in a quantity of user hosts (Host) and a quantity of resource devices in the system, and enhances scalability of the system.

In a possible implementation, physical ports of the at least one user host, the at least one resource device, the management host, and the switch device all are configured with a network address, and the network address is used to determine transmission routing of a communication message in the system.

In embodiments of this application, the management host may configure the network address for the physical port of each device in the system, so that the communication message in the system can be routed based on the network address. This is different from a manner in which a communication message is routed based on a memory address and an ID of a bus domain (or an ID of a switch port) in conventional technologies. The switch device may forward the communication message based on the network address carried in the communication message, and does not need to perform table query and translation between the memory address and the ID of the bus domain (or the ID of the switch port), to reduce a delay and overheads caused by table query and translation. In addition, in conventional technologies, when translation between the memory address and the ID of the switch port is performed by the switch device, the communication message (for example, a TLP packet) further needs to be translated into a message, and the message carries a source ID and a destination ID, to complete message transmission, which consumes additional bandwidth resources. However, in a network address-based routing mechanism in embodiments of this application, the communication message does not need to be translated into a message, to reduce consumption of bandwidth resources.

In a possible implementation, each of the N second entities is configured with a globally unique identifier and/or an entity identifier, the globally unique identifier is used to distinguish between different second entities, and the entity identifier is used to distinguish between different second entities.

In embodiments of this application, each of the plurality of second entities in the system may be configured with the globally unique identifier and/or the entity identifier, to distinguish between different second entities. A length of the entity identifier may be determined based on a total quantity of second entities in all resource devices in a domain or a quantity of second entities in one of all resource devices, to effectively reduce resources used to distinguish between different entities.

In a possible implementation, a first permission identifier is configured for each of the at least one user host, a second permission identifier is configured for each of the N second entities, and access permission of each user host for each second entity is determined based on the first permission identifier and the second permission identifier.

In embodiments of this application, the management host may configure a permission identifier for each user host and each second entity, to determine whether the user host has permission to access the second entity. This ensures security of a resource (namely, one or more second entities included in each resource device) included in the resource device in the system.

In a possible implementation, the physical configuration resource includes one or more of a common configuration management resource, a resource configuration management resource, and an interconnection configuration management resource, and the function configuration resource includes one or more of an artificial intelligence resource, a memory resource, and a network resource.

In embodiments of this application, the physical configuration resource and the function configuration resource of the resource device are separated. The management host may configure and manage the physical configuration resource, and allocate the function configuration resource of the resource device to the user host for use, so that the user host can use one or more of the artificial intelligence resource, the memory resource, and the network resource, and does not need to manage the common configuration management resource, the resource configuration management resource, the interconnection configuration management resource, and the like of the resource device. Therefore, the management host can allocate resources at a finer granularity, and complexity of the user host is reduced.

According to a fifth aspect, an embodiment of this application provides a device resource management method, applied to a management host in a device resource management system. The device resource management system includes at least one user host, at least one resource device, and the management host, each of the at least one resource device includes a first entity and one or more second entities, the first entity includes a physical configuration resource, the one or more second entities includes a function configuration resource generated after the physical configuration resource is configured, the at least one resource device includes at least one first entity and N second entities in total, and N is an integer greater than 1. The method may include: allocating, based on a requirement, the N second entities to the at least one user host for use. A target user host obtains L allocated second entities, the L second entities correspond to Q first entities in the at least one first entity, the target user host is any one of the at least one user host, and L is a positive integer less than or equal to N.

In a possible implementation, a target resource device in the at least one resource device includes P second entities in the N second entities. That the N second entities are allocated, based on the requirement, to the at least one user host for use includes: allocating the P second entities to the at least one user host for use. The L second entities allocated to the target user host include a part or all of the P second entities, and the L second entities are from a same resource device or different resource devices in the at least one resource device.

In a possible implementation, that the P second entities are allocated to the at least one user host for use includes: when P is equal to 1, allocating the P second entities to the target user host for use; or when P is equal to 1, allocating, in a first period of time, the P second entities to the target user host for use, and allocating, in a second period of time, the P second entities to another user host for use. The another user host is a user host other than the target user host in the at least one user host.

In a possible implementation, that the P second entities are allocated to the at least one user host for use includes: when P is greater than 1, allocating the P second entities to the target user host for use; or when P is greater than 1, allocating S second entities in the P second entities to the target user host for use, and allocating a part or all of the other (P-S) second entities in the P second entities to another user host for use. The another user host is a user host other than the target user host in the at least one user host.

In a possible implementation, the system further includes a switch device. The method further includes: connecting the at least one user host, the management host, and the at least one resource device via the switch device.

In a possible implementation, physical ports of the at least one user host, the at least one resource device, the management host, and the switch device all are configured with a network address, and the network address is used to determine transmission routing of a communication message in the system.

In a possible implementation, each of the N second entities is configured with a globally unique identifier and/or an entity identifier, the globally unique identifier is used to distinguish between different second entities, and the entity identifier is used to distinguish between different second entities.

In a possible implementation, a first permission identifier is configured for each of the at least one user host, a second permission identifier is configured for each of the N second entities, and access permission of each user host for each second entity is determined based on the first permission identifier and the second permission identifier.

In a possible implementation, the physical configuration resource includes one or more of a common configuration management resource, a resource configuration management resource, and an interconnection configuration management resource, and the function configuration resource includes one or more of an artificial intelligence resource, a memory resource, and a network resource.

In a possible implementation, the method further includes: determining the L second entities from the N second entities, and determining the target user host from the at least one user host; and sending first configuration information of the L second entities to the target user host. The first configuration information is used to notify the target user host to respectively establish communication channels to the L second entities based on the Q first entities.

In a possible implementation, the method further includes: sending second configuration information of the L second entities to the target user host. The second configuration information is used to notify the target user host to deregister the communication channels to the L second entities.

According to a sixth aspect, an embodiment of this application provides a device resource management method, applied to a target user host in a device resource management system. The device resource management system includes at least one user host, at least one resource device, and a management host, each of the at least one resource device includes a first entity and one or more second entities, the first entity includes a physical configuration resource, the one or more second entities include a function configuration resource generated after the physical configuration resource is configured, the target user host is any one of the at least one user host, the at least one resource device includes at least one first entity and N second entities in total, and N is an integer greater than 1. The method includes: receiving first configuration information of L second entities that is sent by the management host, where the L second entities are second entities in the N second entities, the first configuration information is used to notify the target user host to respectively establish communication channels to the L second entities based on Q first entities, and the Q first entities are first entities, in the at least one first entity, corresponding to the L second entities; and respectively establishing the communication channels to the L second entities based on the Q first entities, and using the L second entities through the communication channels.

In a possible implementation, the method further includes: receiving second configuration information of the L second entities that is sent by the management host, where the second configuration information is used to notify the target user host to deregister the communication channels to the L second entities; and deregistering the communication channels to the L second entities in response to the second configuration information.

In a possible implementation, that the communication channels to the L second entities are respectively established based on the Q first entities includes: creating local devices for the L second entities based on the first configuration information of the L second entities that is sent by the management host; and loading device drivers for the local devices, and establishing the communication channels from the local devices to the L second entities by using the device drivers.

In a possible implementation, that the communication channels to the L second entities are deregistered in response to the second configuration information includes: unloading the device drivers based on the second configuration information of the L second entities that is sent by the management host, where the device drivers are drivers of the local devices created by the target user host for the L second entities; and deleting the local devices corresponding to the device drivers, and deregistering the communication channels from the local devices to the L second entities.

In a possible implementation, physical ports of the at least one resource device and the target user host all are configured with a network address, and the method further includes: sending a communication message to any one of the L second entities through the communication channel. Routing of transmission of the communication message is determined based on the network addresses of the physical ports of the at least one resource device and the target user host.

In a possible implementation, the first configuration information and the second configuration information include a globally unique identifier and/or an entity identifier of each of the L second entities, the globally unique identifier is used to distinguish between different second entities, and the entity identifier is used to distinguish between different second entities.

In a possible implementation, the first configuration information further includes a permission identifier, and the permission identifier is used to determine whether the target user host has permission to access the L second entities.

According to a seventh aspect, this application provides a communication apparatus. The communication apparatus may be used in a management host in a device resource management system. The device resource management system includes at least one user host, at least one resource device, and the management host, each of the at least one resource device includes a first entity and one or more second entities, the first entity includes a physical configuration resource, the one or more second entities include a function configuration resource generated after the physical configuration resource is configured, the at least one resource device includes at least one first entity and N second entities in total, and N is an integer greater than 1. The apparatus includes: a processing unit, configured to obtain a resource allocation policy, where the resource allocation policy is used to determine to allocate L second entities in the N second entities to a target user host in the at least one user host, and L is an integer less than or equal to N; and a transceiver unit, configured to send first configuration information to the target user host, where the first configuration information is used to notify the target user host to register the L second entities.

In a possible implementation, the transceiver unit is further configured to scan the device resource management system, to discover the at least one user host and the at least one resource device.

In a possible implementation, the transceiver unit is further configured to: send an enumeration message in the device resource management system, where the enumeration message is used to discover devices in the device resource management system; receive enumeration response messages separately sent by the at least one user host and the at least one resource device for the enumeration message; and determine the at least one user host and the at least one resource device based on the enumeration response messages.

In a possible implementation, the processing unit is specifically configured to obtain a resource requirement of the target user host in the at least one user host, and determine the resource allocation policy based on the resource requirement.

In a possible implementation, the processing unit is further configured to configure entity identifiers and/or permission identifiers for the L second entities.

In a possible implementation, the first configuration information includes one or more of the following items: globally unique identifiers, entity identifiers, or permission identifiers of the L second entities.

In a possible implementation, the transceiver unit is further configured to send second configuration information to the target user host. The second configuration information is used to notify the target user host to deregister one or more second target entities in the L second entities.

In a possible implementation, the second configuration information includes one or more of the following items: globally unique identifiers, entity identifiers, or permission identifiers of the one or more second target entities.

In a possible implementation, the transceiver unit is specifically configured to: when the resource allocation policy changes, send the second configuration information to the target user host; or when the one or more second target entities or a resource device to which the one or more second target entities belong is faulty, send the second configuration information to the target user host.

In a possible implementation, the processing unit is further configured to: when the resource allocation policy changes, reset the one or more second target entities, and clear the entity identifiers and/or the permission identifiers of the one or more second target entities.

In a possible implementation, the processing unit is further configured to configure a network address for a physical port of the target user host. The transceiver unit is specifically configured to send the first configuration information to the target user host based on the network address of the physical port of the target user host.

In a possible implementation, the processing unit is specifically configured to allocate, based on a requirement, the N second entities to the at least one user host for use. The target user host obtains L allocated second entities, the L second entities correspond to Q first entities in the at least one first entity, the target user host is any one of the at least one user host, and L is a positive integer less than or equal to N.

In a possible implementation, a target resource device in the at least one resource device includes P second entities in the N second entities. The processing unit is specifically configured to allocate the P second entities to the at least one user host for use. The L second entities allocated to the target user host include a part or all of the P second entities, and the L second entities are from a same resource device or different resource devices in the at least one resource device.

In a possible implementation, the processing unit is specifically configured to: when P is equal to 1, allocate the P second entities to the target user host for use; or when P is equal to 1, allocate, in a first period of time, the P second entities to the target user host for use, and allocate, in a second period of time, the P second entities to another user host for use. The another user host is a user host other than the target user host in the at least one user host.

In a possible implementation, the processing unit is specifically configured to: when P is greater than 1, allocate the P second entities to the target user host for use; or when P is greater than 1, allocate S second entities in the P second entities to the target user host for use, and allocate a part or all of the other (P-S) second entities in the P second entities to another user host for use. The another user host is a user host other than the target user host in the at least one user host.

In a possible implementation, the system further includes a switch device. The processing unit is further configured to connect the at least one user host, the management host, and the at least one resource device via the switch device.

In a possible implementation, physical ports of the at least one user host, the at least one resource device, the management host, and the switch device all are configured with a network address, and the network address is used to determine transmission routing of a communication message in the system.

In a possible implementation, each of the N second entities is configured with a globally unique identifier and/or an entity identifier, the globally unique identifier is used to distinguish between different second entities, and the entity identifier is used to distinguish between different second entities.

In a possible implementation, a first permission identifier is configured for each of the at least one user host, a second permission identifier is configured for each of the N second entities, and access permission of each user host for each second entity is determined based on the first permission identifier and the second permission identifier.

In a possible implementation, the physical configuration resource includes one or more of a common configuration management resource, a resource configuration management resource, and an interconnection configuration management resource, and the function configuration resource includes one or more of an artificial intelligence resource, a memory resource, and a network resource.

According to an eighth aspect, this application provides a communication apparatus. The communication apparatus may be used in a target user host in a device resource management system. The device resource management system includes at least one user host, at least one resource device, and a management host, each of the at least one resource device includes a first entity and one or more second entities, the first entity includes a physical configuration resource, the one or more second entities include a function configuration resource generated after the physical configuration resource is configured, the target user host is any one of the at least one user host, the at least one resource device includes at least one first entity and N second entities in total, and N is an integer greater than 1. The apparatus includes: a transceiver unit, configured to receive first configuration information sent by the management host, and determine L allocated second entities based on the first configuration information, where L is a positive integer less than or equal to N, the L second entities are second entities in the N second entities, the first configuration information is used to notify the target user host to register the L second entities, and respectively establish communication channels to the L second entities based on Q first entities, and the Q first entities are first entities, in the at least one first entity, corresponding to the L second entities; and a processing unit, configured to: register the L second entities, respectively establish the communication channels to the L second entities based on the Q first entities, and use the L second entities through the communication channels.

In a possible implementation, the processing unit is specifically configured to: create local devices for the L second entities; and load device drivers for the local devices, and establish communication channels from the local devices to the L second entities by using the device drivers.

In a possible implementation, the processing unit is further configured to enable and use the L second entities.

In a possible implementation, the transceiver unit is further configured to receive an enumeration message sent by the management host, and send an enumeration response message to the management host for the enumeration message.

In a possible implementation, the transceiver unit is further configured to send a resource requirement to the management host.

In a possible implementation, the transceiver unit is further configured to receive second configuration information sent by the management host, and determine one or more to-be-deregistered second target entities in the L second entities based on the second configuration information. The second configuration information is used to notify the target user host to deregister the one or more second target entities. The processing unit is further configured to deregister the one or more second target entities in response to the second configuration information.

In a possible implementation, the processing unit is specifically configured to: create local devices for the L second entities based on the first configuration information of the L second entities that is sent by the management host; and load device drivers for the local devices, and establish communication channels from the local devices to the L second entities by using the device drivers.

In a possible implementation, the processing unit is specifically configured to: unload device drivers loaded for local devices, where the local devices are device nodes created for the one or more second target entities; and delete the local devices.

In a possible implementation, physical ports of the at least one resource device and the target user host all are configured with a network address, and the transceiver unit is further configured to send a communication message to any one of the L second entities through the communication channel. Routing of transmission of the communication message is determined based on the network addresses of the physical ports of the at least one resource device and the target user host.

In a possible implementation, the second configuration information includes one or more of the following items: globally unique identifiers, entity identifiers, or permission identifiers of the one or more second target entities.

In a possible implementation, the first configuration information includes one or more of the following items: globally unique identifiers, entity identifiers, or permission identifiers of the L second entities.

According to a ninth aspect, this application provides a communication apparatus. The communication apparatus may be used in a resource device in a device resource management system. The device resource management system further includes a management host. The apparatus includes: a transceiver unit, configured to receive an enumeration message sent by the management host, where the enumeration message is used to discover a device in the device resource management system; and send an enumeration response message to the management host for the enumeration message, where the enumeration response message is used to report information about the resource device.

In a possible implementation, the enumeration response message includes a globally unique identifier of a target resource device.

According to a tenth aspect, an embodiment of this application provides a computer-readable storage medium, configured to store computer software instructions used by a system/device/apparatus configured to implement the device resource management method provided in one or more of the foregoing aspects. The computer-readable storage medium includes a program designed for performing the foregoing aspect.

According to an eleventh aspect, an embodiment of this application provides a computer program. The computer program includes instructions, and when the computer program is executed by a computer, the computer is caused to perform a procedure performed by a system/device/apparatus configured to implement the device resource management method provided in one or more of the foregoing aspects.

According to a twelfth aspect, an embodiment of this application provides a terminal device. The terminal device includes a processor, and the processor is configured to support the terminal device in implementing a corresponding function in the device resource management method provided in the first aspect, the second aspect, the third aspect, the fifth aspect, or the sixth aspect. The terminal device may further include a memory. The memory is configured to be coupled to the processor, and stores program instructions and data that are necessary for the terminal device. The terminal device may further include a communication interface, used for communication between the terminal device and another device or a communication network.

According to a thirteenth aspect, an embodiment of this application provides a terminal device. The terminal device includes a logic circuit, and the logic circuit is configured to support the terminal device in implementing a corresponding function in the device resource management method provided in the first aspect, the second aspect, the third aspect, the fifth aspect, or the sixth aspect. The terminal device may further include a storage circuit. The storage circuit is coupled to the logic circuit, and stores program instructions and data that are necessary for the terminal device. The terminal device may further include an interface, used for communication between the terminal device and another device or a communication network.

According to a fourteenth aspect, an embodiment of this application provides a chip system. The chip system includes a processor, configured to support a device in implementing functions in the first aspect, the second aspect, the third aspect, the fifth aspect, or the sixth aspect, for example, generating or processing information in the device resource management method. In a possible design, the chip system further includes a memory, and the memory is configured to store program instructions and data that are necessary for the device. The chip system may include a chip, or may include a chip and another discrete component.

According to a fifteenth aspect, an embodiment of this application provides a server, including a communication interface, a memory, and a processor. The communication interface and the memory are coupled to the processor, the communication interface is used by the server to communicate with another device or a communication network, the memory is configured to store computer program code, the computer program code includes computer instructions, and when the processor reads the computer instructions from the memory, the server performs any possible implementation of the first aspect, the second aspect, the third aspect, the fifth aspect, or the sixth aspect.

According to a sixteenth aspect, an embodiment of this application provides a vehicle-mounted device, including a communication interface, a memory, and a processor. The communication interface and the memory are coupled to the processor, the communication interface is used by the vehicle-mounted device to communicate with another device or a communication network, the memory is configured to store computer program code, the computer program code includes computer instructions, and when the processor reads the computer instructions from the memory, the vehicle-mounted device performs any possible implementation of the first aspect, the second aspect, the third aspect, the fifth aspect, or the sixth aspect.

### BRIEF DESCRIPTION OF DRAWINGS

To describe technical solutions in embodiments of this application or in the background more clearly, the following describes accompanying drawings for describing embodiments of this application or the background.
FIG. 1a is a diagram of a system structure based on a PCI bus domain;
FIG. 1b is a diagram of another system structure based on a PCI bus domain;
FIG. 1c is a diagram of a system structure based on a PCIe bus domain;
FIG. 2 is a diagram of a CXL-based system structure;
FIG. 3a is a diagram of an architecture of a device resource management system according to an embodiment of this application;
FIG. 3b is a diagram of an architecture of a data center according to an embodiment of this application;
FIG. 3c is a diagram of layered protocol structures of devices according to an embodiment of this application;
FIG. 4 is a diagram of a structure of a resource device according to an embodiment of this application;
FIG. 5 is a diagram of an architecture of another device resource management system according to an embodiment of this application;
FIG. 6 is a diagram of a structure of interconnection of a plurality of device resource management systems according to an embodiment of this application;
FIG. 7 is a schematic flowchart of a device resource management method according to an embodiment of this application;
FIG. 8 is a schematic flowchart of resource registration according to an embodiment of this application;
FIG. 9 is a schematic flowchart of resource deregistration according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is a diagram of a structure of another communication apparatus according to an embodiment of this application; and
FIG. 13 is a diagram of a structure of another communication apparatus according to an embodiment of this application.

### DESCRIPTION OF EMBODIMENTS

The following describes embodiments of this application with reference to accompanying drawings in embodiments of this application.

In the specification, claims, and the accompanying drawings of this application, terms such as "first", "second", "third", and "fourth" are intended to distinguish between different objects but do not describe a particular order. In addition, terms "include", "have", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification indicates that a particular feature, structure, or characteristic described with reference to the embodiment may be included in one or more embodiments of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with another system by using the signal).

Some terms in this application are first described, to help a person skilled in the art have a better understanding.
(1) Globally unique identifier (globally unique identifier, GUID): It is a digital identifier that can be generated according to an algorithm, typically with a binary length of 128 bits (bit). The GUID is mainly used to distinguish between different nodes or devices in a network or system including a plurality of nodes or computer devices, because ideally no computer or computer cluster generates two identical GUIDs. However, although the GUID has generally 128 bits, a total quantity of bits of the GUID may reach 2^128, and a probability that two identical GUIDs are randomly generated is low but not zero. Therefore, the algorithm used for GUID generation often incorparte non-random parameters (for example, time), to ensure that GUIDs do not repeat. In embodiments of this application, a management host may determine, based on GUIDs, user hosts, resource devices, and a quantity of entities (including a first entity and a second entity) included in a resource device in a domain (domain), distinguish between different second entities based on GUIDs, and allocate second entities to user hosts for use. In addition, in some possible implementations, the management host (or the user host) may also determine device types of resource devices (or second entities) based on GUIDs.
(2) Entity identifier (entity identifier, EID): In embodiments of this application, the management host may additionally configure EIDs for second entities in a resource device, to distinguish between different second entities. A length of an EID may be determined based on a total quantity of second entities in all resource devices in a domain or a quantity of second entities in one of all resource devices. In comparison GUIDs used for distinguishing between different second entities, EIDs use fewer resources.
(3) Permission identifier, also known as partition identifier (partition identifier, PID). In embodiments of this application, the management host may additionally configure PIDs for user hosts and second entities of each resource device in a domain, to determine access permission of each user host in the domain for each second entity.
(4) "A plurality of" in this application means two or more than two. The term "and/or" describes an association relationship between associated objects and represents that three relationships may exist. For example, A and/or B may represent the following three cases: Only A exists, both A and B exist, and only B exists. The character "/" usually indicates an "or" relationship between the associated objects.

Technical problems to be specifically resolved in this application are first analyzed and proposed. A current resource management solution includes the following solution 1 and solution 2.

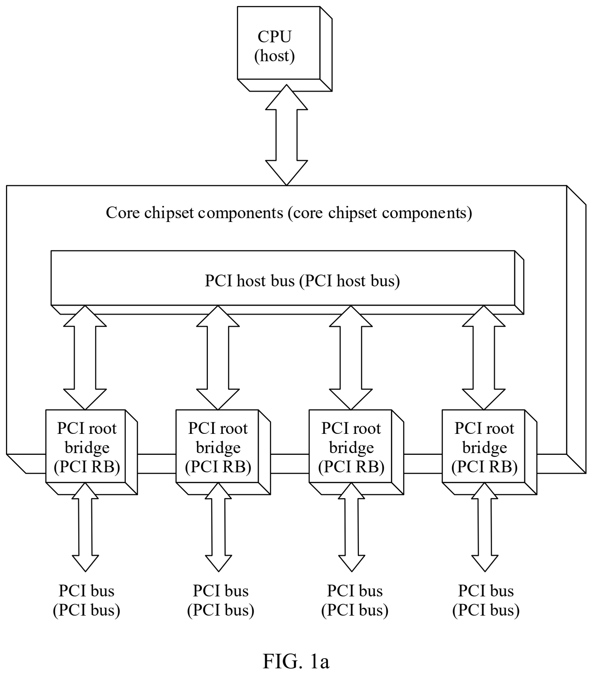

Solution 1: In an X86 system structure, a peripheral device may access a processor system (corresponding to a host) through a peripheral component interconnect (peripheral component interconnect, PCI) bus or a peripheral component interconnect express (peripheral component interconnect express, PCIe) bus. FIG. 1a is a diagram of a system structure based on a PCI bus domain. A PCI host bridge (PCI Host Bridge) is configured to isolate a memory domain from the PCI bus domain (corresponding to a PCI host bus (PCI Host Bus) in FIG. 1a) in the processor system, and complete data exchange between the processor system and a PCI device. One processor system may have a plurality of PCI root bridges (PCI Root Bridge), each PCI root bridge (for example, a PCI RB in FIG. 1a) may manage one PCI bus (for example, a PCI bus in FIG. 1a) space, and one PCI bus tree is mounted under each PCI bus. All PCI devices on a same PCI bus tree belong to a same PCI bus domain.

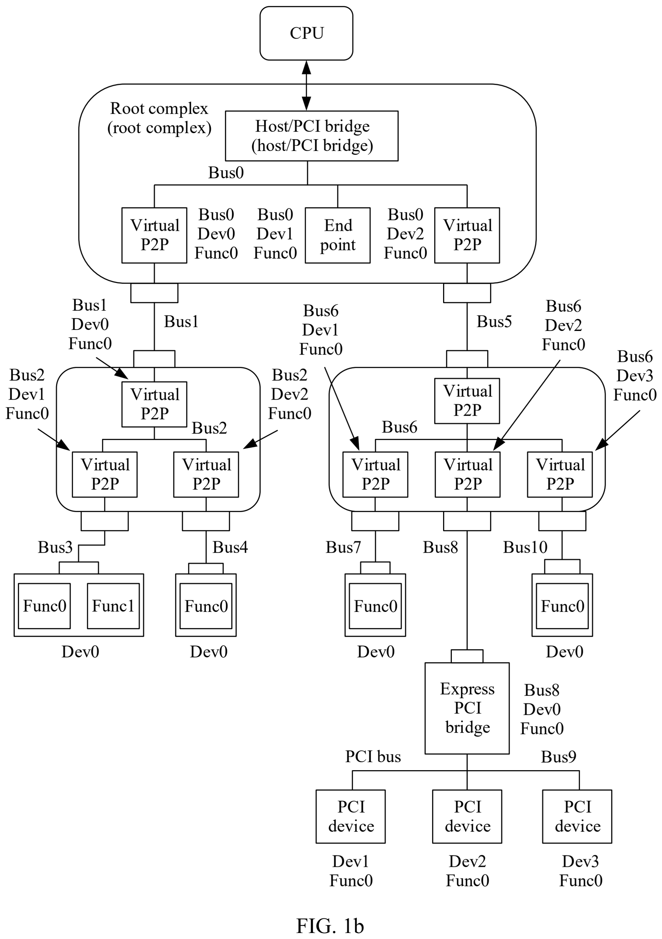

One PCI device belongs to one PCI bus domain, and one PCI bus domain is usually mounted under one host bus domain. Therefore, the processor system can discover and enumerate all PCI devices mounted on the PCI bus tree along the PCI bus. FIG. 1b is a diagram of another system structure based on a PCI bus domain. To avoid conflicts, all PCI devices need to be coded. Usually, the PCI devices are distinguished based on three codes: a bus number (Bus Number), a device number (Device Number), and a function number (Function Number), which are referred to as a BDF for short. The processor system may uniquely determine a PCI device based on a BDF, for example, (Bus0, Dev0, Func0), (Bus0, Dev1, Func0), (Bus0, Dev2, Func0), (Bus1, Dev0, Func0), (Bus2, Dev1, Func0), and (Bus2, Dev2, Func0) may be used to determine unique PCI devices, where (Bus0, Dev1, Func0) corresponds to an end point (End Point), and (Bus0, Dev2, Func0) corresponds to virtual PCI-to-PCI (Virtual P2P).

In the foregoing structure, the PCI device is discovered and used by only one user host (Host), and other hosts cannot discover and use the PCI device. In addition, PCIe protocols define that memory read/write packets are routed based on addresses in a PCI bus domain. Therefore, in a multi-host scenario, there are a plurality of root bridges, that is, a plurality of PCI bus addresses are included, and packet ID routing cannot be directly supported. For example, a memory read/write packet is routed based on an ID of a bus. When there are a plurality of hosts, a plurality of PCI bus domains exist, and IDs of bus domains may repeat, which causes disorder. Consequently, packet ID routing cannot be directly supported.

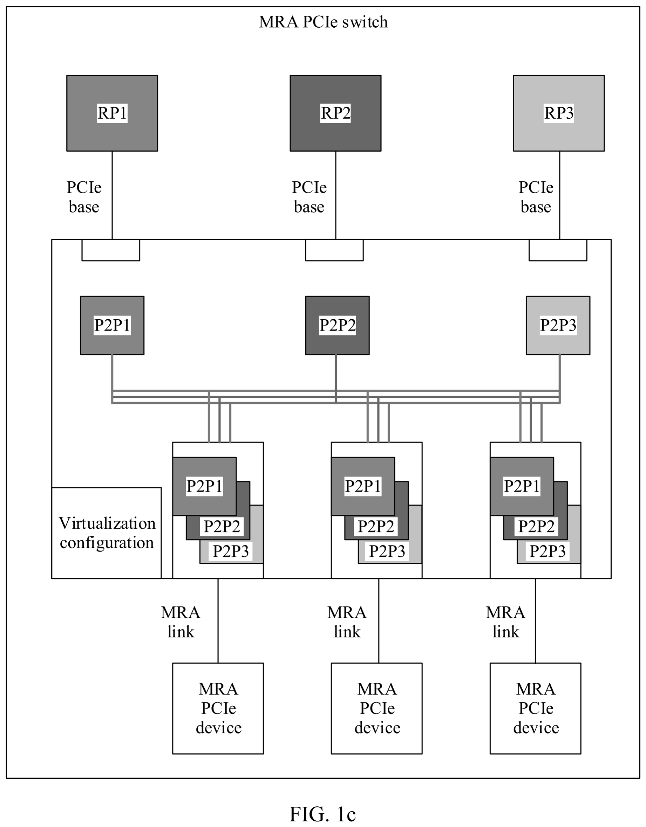

Similarly, a PCIe device is discovered and used by only one host, and other hosts cannot discover and use the PCIe device. To make a PCIe device can be used by a plurality of devices, PCIe protocols define a feature of multi-root input/output virtualization (multi-root I/O virtualization, MR-IOV), also referred to as multi-root IO virtualization. The essence of MR-IOV is to virtualize a single physical PCIe bus domain into a plurality of virtual PCIe bus domains, which may correspond to a plurality of processor systems, to implement isolation between different virtual PCIe bus domains. FIG. 1c is a diagram of a system structure based on a PCIe bus domain, including a switch device (Switch) that supports MR-IOV. After virtualization configuration, the switch may include a plurality of root ports (Root Port, RP, for example, an RP1, an RP2, and an RP3) and a plurality of groups of P2P (PCI-to-PCI) bridges (for example, P2P1, P2P2, and P2P3). Each group of P2P may form one PCIe bus domain, and address spaces of the plurality of PCIe bus domains are independent of each other, so that the host can implement isolation access to peripheral devices. The MR-IOV architecture simplifies a structure of a data center, complicates the switch. In addition, the peripheral device also needs to support MR-IOV (namely, MRA PCIe device).

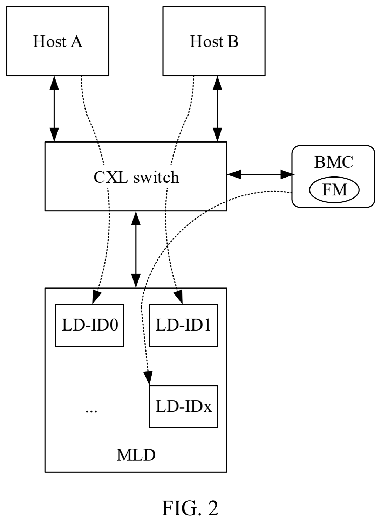

Solution 2: Device management according to a compute express link (compute express link, CXL) protocol is built on PCIe, supporting a plurality of hosts while maintaining compatibility with PCIe. The CXL protocol introduces a fabric manager (fabric manager, FM) to manage peripheral devices and hosts in an entire domain (Domain), and is responsible for allocating the peripheral devices to different hosts for use. FIG. 2 is a diagram of a CXL-based system structure. A peripheral device may be a physical device, a physical device (for example, a multi-logic device (multi-logic device, MLD)) may be divided into a plurality of logic devices (for example, LD-ID0, LD-ID1, ..., and LD-IDx), and the FM (usually running on a baseboard management controller (baseboard management controller, BMC)) may allocate the LD-ID0 to a host A for use, and allocate the LD-ID1 to a host B for use, where the host A and the host B do not sense IDs of the logical devices. The IDs are allocated and translated by a CXL switch.

In the scenario supporting a plurality of hosts, different hosts have different address spaces, and memory access initiated by the host is routed based on a memory address, which is the same as that of the PCIe protocol from the perspective of the host. In a subsequent CXL 3.0 protocol, an ID routing mechanism is introduced. The FM may allocate an ID to each port of the CXL switch, so that a packet can be routed to a destination based on the ID in a switch network. The ID routing mechanism can improve scalability of the CXL switch, support an increase in a plurality of levels of switches, and support access to more peripheral devices and hosts. However, in the ID routing mechanism, a table used to implement translation between a host memory address and an ID needs to be added to the CXL switch, and a transaction layer packet (transaction layer packet, TLP) needs to be translated into a message (Message), where the message carries a source ID and a destination ID.

The foregoing solutions have the following disadvantages.

Disadvantage 1: A scale of hosts is limited, and scalability is poor. For the solution 1, the host communicates with the peripheral device over a static logic path established by the switch. When a quantity of hosts is increased, the switch needs to establish more static logic paths to support communication between more hosts and peripheral devices, which greatly increases complexity of the switch, bringing challenges to hardware implementation of the high-complexity switch. Therefore, the scale of hosts is limited. For the solution 2, the CXL protocol specifies that one physical device can be divided into a maximum of 16 logic devices (for example, ID0 to ID15), that is, only a maximum of 16 hosts can be supported.

Disadvantage 2: Resources of peripheral devices are statically allocated to different user hosts, and flexibility is poor. For the solution 1, the logic path established by the switch between the host and the peripheral device is static. For the solution 2, a relationship between the resource of the peripheral device managed by the FM and the host is static. Because the CXL switch does not support rebinding of a port to a different area (for example, a VCS), once the relationship between the resource of the peripheral device and the user host changes, the switch used for routing and forwarding may need to be restarted, and the FM and the host need to deregister the peripheral device and update a routing table. This procedure is complex.

Disadvantage 3: The granularity allocation of the resources of the peripheral devices is not fine enough. For the solution 1, a device model of a PCI device or a PCIe device is a physical function (physical function, PF) and a virtual function (virtual function, VF), that is, PF+VF. The physical function is a complete PCIe function, and can be discovered, managed, and processed like any other PCIe device. The physical function may be used to configure and control the PCIe device. The virtual function is a PCI function associated with the physical function. Different from the physical function, the virtual function may configure only behavior of the virtual function. The virtual function is created by the physical function. Consequently, the resources of the peripheral devices can be allocated to different user hosts only at a PF granularity, instead of a VF granularity. For the solution 2, device management according to the CXL protocol is still based on PCIe, and the device model is also PF+VF. Consequently, allocation at a VF granularity cannot be implemented.

Disadvantage 4: The switch needs to perform complex table query and translation, which increases overheads. For the solution 1, when the processor system communicates with the peripheral device over the virtual PCIe bus domain, the switch needs to perform translation between a memory address and an ID of the virtual PCIe bus domain, which increases a translation delay. For the solution 2, the table used to implement translation between the host memory address and the ID needs to be added to the CXL switch, and a TLP packet needs to be translated into a message, which introduces additional table query and translation delays, and consumes additional bandwidth.

In view of this, this application provides a device resource management system and a related method, to implement resource pooling of a resource device. Therefore, a plurality of user hosts can share resources of a resource device, and a resource granularity of the resource device is a VF-level granularity (a resource granularity in conventional technologies is a PF-level granularity). In other words, a management host can allocate the resources of the resource device to user hosts at a finer resource granularity, so that the resources can be flexibly allocated based on requirements of the user hosts, and resource utilization is high. In addition, the management host may manage management resources of the resource device, and user hosts do not need to manage the management resources of the resource device, to reduce complexity of the user hosts. In addition, the management host may allocate a network address to a physical port of each device in the system, and the system may transmit packets according to a network address-based routing mechanism. Therefore, when a quantity of user hosts (and resource devices) is increased, a large quantity of user hosts (and resource devices) may be supported by extending a routing table, instead of continuously increasing complexity of the switch. This implements good scalability. In addition, the switch can transmit a packet based on a network address of a source and a network address of a destination without additionally performing complex table query and translation, to reduce a delay and bandwidth overheads. Further, the management host in the system may dynamically allocate the resources of the resource device based on changes of a resource allocation policy or states of the resource device. This is more flexible.

To better understand the device resource management method and the related system provided in embodiments of this application, the following describes a system architecture and/or an application scenario of the device resource management system provided in embodiments of this application. It may be understood that the system architecture and the application scenario described in embodiments of this application are intended to describe technical solutions in embodiments of this application more clearly, and do not constitute a limitation on the technical solutions provided in embodiments of this application.

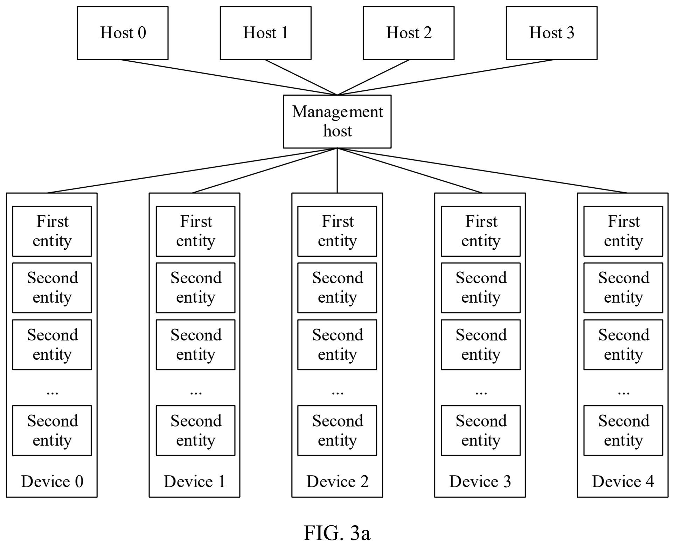

The following describes the architecture of the device resource management system in embodiments of this application with reference to the accompanying drawings. FIG. 3a is a diagram of an architecture of a device resource management system according to an embodiment of this application. The device resource management system may include one or more user hosts (namely, at least one user host, for example, four user hosts including a host 0, a host 1, a host 2, and a host 3), a management host, and one or more resource devices (namely, at least one resource device, for example, five resource devices including a device 0, a device 1, a device 2, a device 3, and a device 4).

The user host usually includes a CPU and a memory, and is a device that can carry or run an independent operating system (OS). The user host may correspond to a physical server (including a processor and a memory), or may correspond to one of one or more virtual user hosts obtained by virtualizing a physical server. If the user host needs to process tasks or data, the user host usually needs to use resources of the resource device for processing.

The resource device may also be referred to as a peripheral device. Common resource devices include storages (for example, hard disks, disks, or tape drives), network interface cards, audio cards, graphics cards, built-in modems (Modem), built-in asymmetric digital subscriber line (asymmetric digital subscriber line, ADSL) modems (Modem), USB 2.0 cards, IEEE 1394 cards, integrated drive electronics (integrated drive electronics, IDE) interface cards, redundant array of independent disks (redundant array of independent disks, RAID) cards, television cards, video capture cards, and other various expansion cards. If the user host wants to process tasks or data, the user host usually needs to use resources of the resource device. For example, the user host may use disks to store operating systems, system files, data processed in batches, and established databases. For another example, the user host may use tape drives to store records of receiving and sending information, to keep archives, and may also perform program debugging and fault tests. For example, any one of the at least one user host may occupy the resources of the resource device via a second entity of the resource device, to process tasks or data. In embodiments of this application, the device resource management system may include the at least one resource device, and each resource device may include a first entity and one or more second entities (namely, at least one second entity). The first entity includes a physical configuration resource of the resource device, and the one or more second entities include a function configuration resource generated after the physical configuration resource of the resource device is configured. The at least one resource device may include at least one first entity and N second entities in total. Optionally, each resource device may correspond to one physical device, or may correspond to one of one or more logic devices obtained by virtualizing one physical device. Optionally, each resource device may further have one or more physical ports. When the user host accesses a device resource (for example, the first entity and/or the second entity) of the resource device, an access request packet can access the required device resource from any port, that is, the ports are shared by a plurality of device resources. The system can allocate the plurality of device resources to different user hosts. In this case, the plurality of device resources are isolated to some extent. In other words, one resource device in embodiments of this application may implement a plurality of ports, and resource devices may communicate with each other through the ports. The first entity (Function entity 0) or the second entity (Function entity 1, 2, 3, ...) may be understood as an isolated device resource set, and software may access a resource of the first entity or the second entity through interconnected ports between resource devices (Device).

The management host may be an independent physical server (including a processor and a memory), or may correspond to one of one or more virtual hosts obtained by virtualizing one physical server. The management host usually carries independent management software (for example, a fabric manager (Fabric Manager, FM)). It may be understood that, when the user host carries management software (for example, an FM), the user host is also a management host, that is, a host may be both a management host and a user host. The management host may be configured to allocate the resource (namely, the second entity) of the resource device in the device resource management system to the one or more user hosts in the system for use. Optionally, the management host may register or deregister an internal resource of the resource device based on a change of an allocation policy or a change of a status of the resource device, and dynamically allocate the resource of the resource device to the user host for use. For example, the management host may allocate the N second entities to the at least one user host based on a requirement (or the resource allocation policy), and L second entities may be allocated to a target user host.

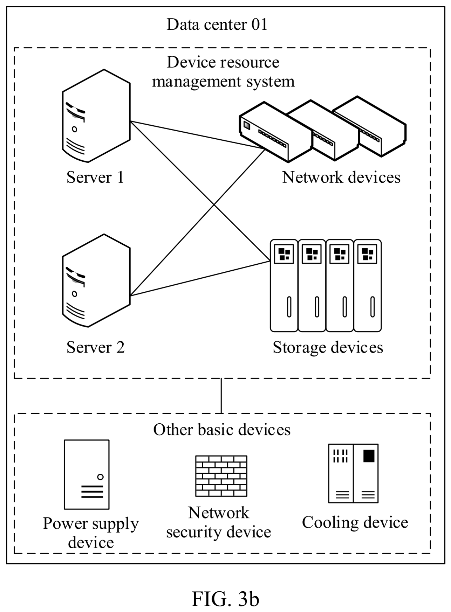

For ease of understanding, the following describes the application scenario of the device resource management system provided in embodiments of this application by using an example. A scenario in which the device resource management system is applied to a data center is used as an example. FIG. 3b is a diagram of an architecture of a data center according to an embodiment of this application. The data center (data center, DC) 01 usually implements central processing, storage, transmission, exchange, and management of information in a physical space, may usually include servers (for example, a server 1 and a server 2), a network device, a storage device, and the like, and may further include other basic devices and another device (not shown in the figure) that provides a specific service for the server.

The server may be an independent server (for example, the server 1 and the server 2), or may be a server cluster including a plurality of servers (for example, a server cluster including the server 1 and the server 2). The server usually includes a CPU and a memory. The network device may be a router, a switch, a network interface card (network card), or the like, and is configured to provide a network service for the server. The storage device is a device configured to store information, and provides a data storage service for the server. Usually, information is digitized and then stored by using a medium like an electric medium, a magnetic medium, or an optical medium, for example, a hard disk or a memory card. The other basic devices may include various devices that can ensure that the data center 01 can operate normally, for example, network security devices (for example, firewalls), power supply devices (for example, uninterruptible power supplies UPSs), cooling devices (for example, air conditioners), and fire extinguishing devices (for example, smoke detection systems or fire extinguishers).

The management host provided in embodiments of this application may correspond to a server device in the data center 01, for example, the server 1 or the server 2. Alternatively, the management host may correspond to a server cluster, for example, the server cluster including the server 1 and the server 2. Alternatively, the management host may correspond to one of a plurality of hosts obtained by virtualizing one server device. For example, three hosts are obtained by virtualizing the server 1, and a host whose sequence number is 1 may be the management host. Similarly, the user host provided in embodiments of this application may correspond to a server device in the data center 01, for example, the server 1 or the server 2. Alternatively, the user host may correspond to a server cluster, for example, the server cluster including the server 1 and the server 2 (or a cluster including other servers). Alternatively, the user host may correspond to one of a plurality of hosts obtained by virtualizing one server device. For example, three hosts are obtained by virtualizing the server 1, and a host whose sequence number is 2 and/or a host whose sequence number is 3 may be user hosts or a user host. In addition, the resource device provided in embodiments of this application may correspond to various devices that are in the data center 01 and that are configured to provide services for the server, including the network device (for example, the network card), the storage device (for example, the hard disk), and the another device that provides the specific service for the server (for example, a modem, a capture card, and various expansion cards, which are not shown in the figure). It should be noted that some devices in the other basic devices in the data center 01 may alternatively be resource devices, for example, firewall devices. Classification of device types in the figure is merely for ease of understanding, and does not constitute a specific limitation.

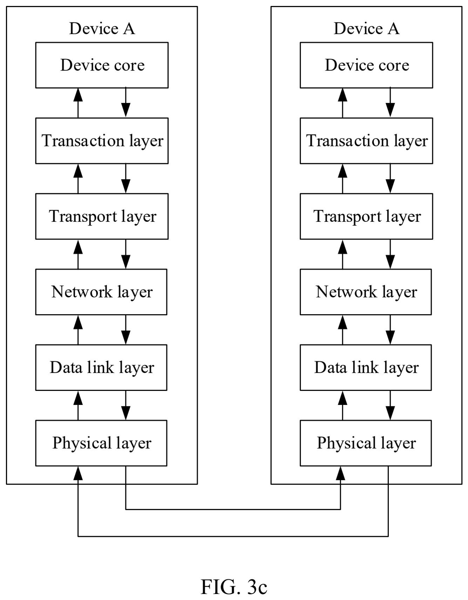

For layered protocol structures of various devices in the device resource management system provided in embodiments of this application, refer to an open system interconnection (open system interconnection, OSI) model. FIG. 3c is a diagram of layered protocol structures of devices according to an embodiment of this application. Protocol layers of a device A and a device B each may include a device core, a transaction layer (Transaction Layer), a transport layer, a network layer, a data link layer (Data Link Layer), a physical layer (Physical Layer), and the like from top to bottom. The device A may be any one of the management host, the user host, or the resource device in the device resource management system, the device B may be any one of the management host, the user host, or the resource device in the device resource management system, and the device A and the device B are different devices.

The physical layer is a lowest layer. The physical layer is responsible for a connection between interfaces or devices, and connects physical interfaces. The physical layer may be understood corresponding to a physical layer in an OSI seven-layer mode in a network, and determines a physical feature of an interface, for example, point-to-point serial connection, micro-differential signal drive, hot plug, and configurable bandwidth. The physical layer may complete transmission of an original bit stream between adjacent nodes, that is, is responsible for sending and receiving data in a bit stream manner.

The data link layer ensures reliable and correct transmission of a data packet, that is, prepares for physical transmission. For example, a sequence number and a suffix may be added to the data packet, or a redundancy check code may be sent to the transaction layer.

The network layer is responsible for managing a network address, locating a device, determining routing, and the like. This layer establishes a connection between two nodes through IP addressing, selects a proper route and a switch node for a packet sent from a transport layer at a source end, and correctly sends the packet to a transport layer at a destination end based on an address. Optionally, in embodiments of this application, behavior of allocating a network address to each device in the system by the management host may occur at this layer.

The transport layer is responsible for segmenting and combining data, to implement end-to-end logic connections. The transport layer establishes end-to-end connections, and provides reliable and transparent end-to-end data transmission services, including error control, flow control, and the like, for upper-layer protocols. This layer shields details of lower-layer data communication from an upper layer. In this way, an upper-layer user sees only a reliable source-to-destination data path between two transport entities, which is controlled and set by the user.

The transaction layer mainly performs synchronous memory access, asynchronous memory read/write, message sending/receiving, ID configuration of a function entity, and the like. The transaction layer receives a read or write request from the device core, creates a request packet for the request, and transmits the request packet to the transport layer, the network layer, the data link layer, and the physical layer. Usually, the requests are executed separately. Some request packets require response packets. After sending a request, the device core may also receive a response packet, and associate the response packet with an original software request. Usually, the transaction layer receives data from the device core, encapsulates the data into a TLP (Transaction Layer Packet), and then sends the TLP to the transport layer, the network layer, and the data link layer. In addition, the transaction layer may also receive a data packet from the transport layer, and then forward the data packet to the device core.

The device core, also referred to as an application layer or a function layer (Function Layer), is used to perform bus/device management, memory maintenance, unified asynchronous memory access, unified function invocation, and the like. The device core provides, based on core logic and local software, necessary information required by the transaction layer to generate a TLP, for example, various data requests, resource configuration indications, and device management indications. Various types of information (for example, first configuration information and second configuration information) in the device resource management method provided in embodiments of this application may be generated when the device core performs bus/device management (including resource allocation, resource registration, resource deregistration, and the like), sent to the transaction layer for encapsulation, transferred to the transport layer and the network layer for processing, and finally sent out after passing through the data link layer and the physical layer. A receiver performs reverse steps, that is, data first passes through a physical layer, and then is sent to a data link layer, a network layer, a transport layer, and a transaction layer. For example, in a process of transmitting data (for example, the first configuration information), a device core of the management host converts a format of the data into a packet format that can be accepted by a transaction layer (Transaction Layer), and sends a packet to the transaction layer. The transaction layer generates a corresponding data packet that may be stored in a corresponding buffer (Buffer), and then continues to transmit the data packet to a transport layer and a network layer. The transport layer and the network layer add headers of the transport layer and the network layer to the data packet. Then, the data packet is sent to a data link layer (Data Link Layer). The data link layer adds a sequence number (Seq Num) and a suffix checksum to the data packet sent from the upper layer, so that a receiver checks correctness of the data of the receiver. Finally, the data is coded at a physical layer, and transmitted to a target user host over a link. Correspondingly, the data received by the target user host first passes through a physical layer, and then is sent to a data link layer, a network layer, a transport layer, and a transaction layer. Finally, a device core may determine, based on the first configuration information, an allocated second entity, and register and use the second entity. Optionally, some functions of the device core may alternatively be deployed at the transaction layer, that is, some functions implemented by the device core are combined into the transaction layer for implementation. This is not specifically limited herein. For example, some interfaces may be further included above the device core, for example, a software programming interface and a firmware interface. The software programming interface may include an asynchronous communication library, a memory access management library, a bus/device driver framework, a unified function invocation library, and the like. The firmware interface may include a distributed BIOS interface, a domain manager interface, and the like.

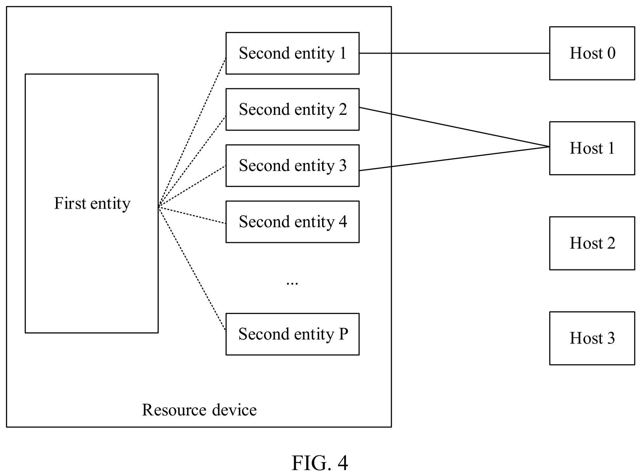

In a possible implementation, a target resource device in the at least one resource device includes P second entities in the N second entities. FIG. 4 is a diagram of a structure of a resource device according to an embodiment of this application. The resource device may include one first entity and P second entities, and the management host may allocate the P second entities to the at least one user host for use. L second entities allocated to the target user host include a part or all of the P second entities, that is, the management host may allocate the part or all of the P second entities to the target user host. For example, when P is equal to 1, the management host may allocate the P second entities to the target user host for use. Alternatively, when P is equal to 1, the management host may allocate, in a first period of time, the P second entities to the target user host for use, and allocate, in a second period of time, the P second entities to another user host for use. When P is greater than 1, the P second entities are allocated to the target user host for use. Alternatively, when P is greater than 1, S second entities in the P second entities are allocated to the target user host for use, and a part or all of the other (P-S) second entities in the P second entities are allocated to another user host for use. The another user host is a user host other than the target user host in the at least one user host. As shown in FIG. 4, the management host allocates a second entity 1 to a host 0 (the target user host), and allocates a second entity 2 and a second entity 3 to a host 1 (the another user host).

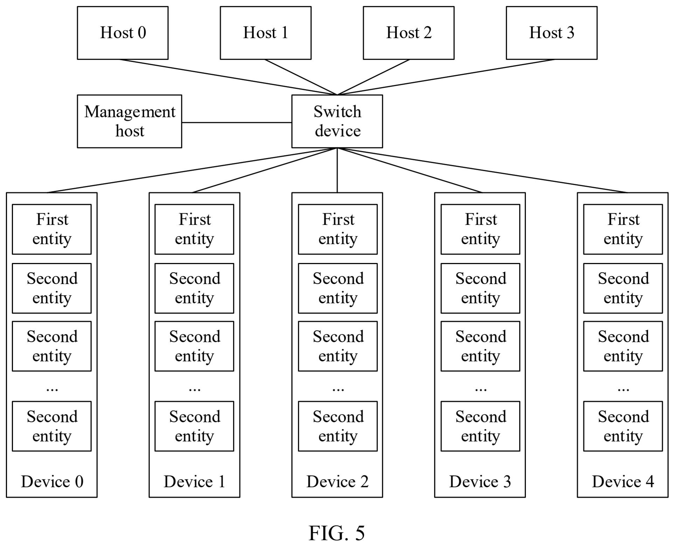

In a possible implementation, the device resource management system may further include a switch device (for example, a switch). FIG. 5 is a diagram of an architecture of another device resource management system according to an embodiment of this application. The switch device may be configured to connect to the at least one user host, the management host, and the at least one resource device. The switch device may provide a large quantity of ports. The switch device is added, so that a connection may not be directly established between the at least one user host, the management host, and the at least one resource device. This reduces and protects physical ports of the foregoing devices, and helps the foregoing system increase a quantity of user hosts (Host) and a quantity of resource devices. In addition, the switch device may further forward a communication message (for example, a packet) for each device in the foregoing system.

Optionally, the management host may configure a network address (network address) for each physical port of the at least one user host, the management host, and the at least one resource device (which may further include a switch device), so that a communication message for communication between the at least one user host, the management host, and the at least one resource device may be routed based on the network address of each physical port. However, in conventional technologies, a communication message is transmitted through route addressing based on a memory address and an ID of a virtual PCIe bus domain (or an ID of a port of a CXL switch), and the switch needs to perform complex table query and translation, which causes an additional delay and consumes additional bandwidth. In comparison with the foregoing routing solution, in embodiments of this application, routing for transmission of the communication message may be determined based on the network address configured for the physical port of each device. For example, the communication message (for example, a packet) may include network addresses of a source port and a destination port. When forwarding the communication message, the switch device performs routing based on the network addresses of the source port and the destination port, to implement communication between the devices. Table query and translation do not need to be performed, and both a delay and bandwidth overheads are low.

It should be noted that there are a plurality of hosts in the device resource management system, each host has an independent memory (Memory) address space, and memory address spaces of the hosts are usually the same (for example, a size of each memory address space is from 0 GB to 4 GB). Therefore, the communication message in the system cannot be routed based on a memory address as in the PCIe architecture. Otherwise, confusion may occur. However, in embodiments of this application, a network address (network address)-based routing mechanism may be used, that is, a packet may carry a network address, and does not need to carry a memory address. For example, after scanning a domain for devices, the management host may allocate a network address to a physical port of each device, and establish a routing table of the entire domain. The routing table may be used to specify a forwarding port of the switch device (Switch) at each destination network address (Destination Network Address). Alternatively, if the resource device includes a function of the switch, the routing table may be used to specify a forwarding port of the resource device at each destination network address.

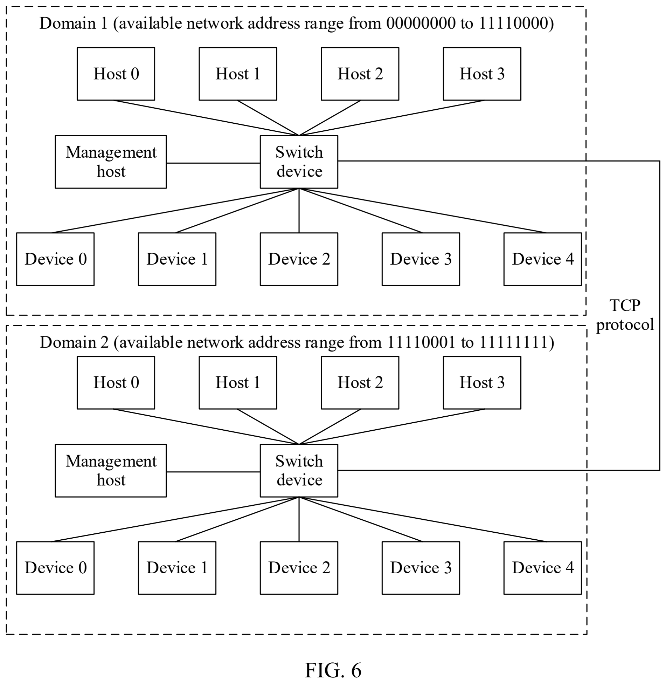

It should be further noted that the network address-based routing mechanism also enables communication between devices across different domains (which may correspond to different device resource management systems). FIG. 6 is a diagram of a structure of interconnection of a plurality of device resource management systems according to an embodiment of this application. A domain 1 includes a plurality of user hosts, one management host, a plurality of resource devices, and a switch device, a domain 2 includes a plurality of user hosts, one management host, a plurality of resource devices, and a switch device, and ranges of network addresses that can be allocated to different domains are different. For example, a network address range used by physical ports of the devices in the domain 1 is from 00000000 to 11110000, and a network address range used by physical ports of the devices in the domain 2 is from 11110001 to 11111111. Data transmission may be performed between the domain 1 and the domain 2 according to a network protocol (for example, a transmission control protocol (transmission control protocol, TCP)). It may be understood that when passing through a switch network, a communication message (for example, a packet) sent from a communication end is forwarded based on a destination network address. A field at a transaction layer of the packet does not change, and content of the packet above a link (Link) layer is not changed. In this case, when the packet arrives at a destination, a controller on a destination side can still correctly parse the field at the transaction layer of the packet. When communication messages are involved in devices across different domains, some fields at a transport (Transport) layer may be changed, but a field at a transaction layer is usually not changed.

Optionally, the management host may distinguish, based on globally unique identifiers (GUID), between a plurality of second entities (namely, the N second entities) included in the at least one resource device in the device resource management system. The GUID is a globally unique device identifier typically with a length of 128 bits. The configured GUIDs can not only be used to distinguish between different resource devices, but also distinguish between entities (for example, the first entity and the one or more second entities) included in each resource device. In addition, when scanning the domain, the management host may also discover and determine, based on the GUIDs, a quantity of devices in the domain and device types of the devices.

Optionally, to distinguish between the plurality of second entities (namely, the N second entities) included in the at least one resource device in the device resource management system, the management host may alternatively configure an entity identifier (EID) for each second entity in the system. In this way, the EIDs may be used to distinguish between the different second entities. A length of the EID may be determined based on a total quantity of second entities in all resource devices in the domain or a quantity of second entities in one of all resource devices. In comparison with a manner in which the GUIDs are used to distinguish between different second entities, fewer resources are used.

For example, the length of the EID is determined based on the total quantity of second entities. For example, if the total quantity of second entities in all the resource devices in the domain is 16, the management host may distinguish between all the second entities in the domain based on 4-bit data. For another example, if the total quantity of second entities in all the resource devices in the domain is 32, the management host may distinguish between all the second entities in the domain based on 5-bit data. For example, the length of the EID may alternatively be determined based on a quantity of second entities included in a resource device, and the quantity of second entities included in the resource device is usually greater than a quantity of second entities included in another resource device. For example, the device resource management system includes three resource devices (a device 1, a device 2, and a device 3), and the device 1 includes a largest quantity of second entities (for example, five second entities). In this case, the management host may distinguish between all the second entities in the domain based on 5-bit data. The first 2 bits in the 5-bit data may be used to distinguish between different resource devices, and the last 3 bits may be used to distinguish between different second entities in a same resource device. In comparison with the manner in which the GUIDs are used to distinguish between different second entities, in embodiments of this application, EIDs are used to distinguish between different second entities, and fewer resources are used. It may be understood that the EIDs are configured to distinguish between different second entities. For a specific configuration manner of the EID, refer to another manner. This is not specifically limited herein. It may be understood that, when there are a large quantity of second entities in the system, and resources required for configuring EIDs to distinguish between different second entities are greater than resources required for configuring GUIDs, the GUIDs may be used to distinguish between the second entities, and the EIDs are not configured.

It should be noted that, after the management host configures an EID for each second entity, when two communication parties of a communication message (for example, a packet) in the device resource management system relate to a second entity, the packet may further include an EID of the second entity. Therefore, after the switch device routes the packet to a corresponding resource device based on network addresses of a source port and a destination port, the resource device may find the corresponding second entity based on the EID included in the packet, to complete routing of the packet.

In a possible implementation, to ensure security of a resource (namely, one or more second entities included in each resource device) included in the resource device in the system, the management host may configure a permission identifier (namely, a first permission identifier, which is also referred to as a first partition identifier) for each of the at least one user host. In addition, the management host also configures a permission identifier (namely, a second permission identifier, which is also referred to as a second partition identifier) for each of the N second entities included in the at least one resource device. Whether a user host in the at least one user host has permission to access a second entity in the N second entities may be determined based on a permission identifier (namely, a first permission identifier) of the user host and a permission identifier (namely, a second permission identifier) of the second entity. Optionally, when a value of the first permission identifier is the same as a value of the second permission identifier, the user host corresponding to the first permission identifier may access the second entity corresponding to the second permission identifier. Alternatively, a user host corresponding to a permission identifier with a high priority may access a second entity corresponding to a permission identifier with a low priority. For example, the device resource management system may include three user hosts (for example, a host 1, a host 2, and a host 3), and the at least one resource device includes five second entities (for example, a second entity 1, a second entity 2, a second entity 3, a second entity 4, and a second entity 5). A permission identifier of the user host 1 is set to 1, a permission identifier of the user host 2 is set to 3, and a permission identifier of the user host 3 is set to 5. A permission identifier of the second entity 1 is set to 1, a permission identifier of the second entity 2 is set to 3, a permission identifier of the second entity 3 is set to 2, a permission identifier of the second entity 4 is set to 1, and a permission identifier of the second entity 5 is set to 4. If the permission identifier of the user host is the same as the permission identifier of the second entity, the user host can access the second entity. In this case, the user host 1 can access the second entity 1 and the second entity 4 whose permission identifiers are both 1. If a priority corresponding to the permission identifier of the user host is higher than or equal to a priority corresponding to the permission identifier of the second entity, the user host can access the second entity. In this case, the user host 1 may access any one of the five second entities (for example, a lower value of the permission identifier indicates a higher priority, and when the permission identifier is set to 1, the user host has a highest priority).

In a possible implementation, the management host may separately configure entity identifiers and/or permission identifiers for the user host, the first entity, and the N second entities in the device resource management system. Optionally, the management host may alternatively configure entity identifiers and/or permission identifiers for only the user host and the N second entities in the device resource management system. In other words, the management host may allocate an ID (namely, an entity identifier and/or a permission identifier) to each of all user hosts and entities (including the first entity and the second entities, or including only the second entities) in the management system, to uniquely identify the host or the entity in the system. This implements unified and peer-to-peer management on user hosts and resource devices. For example, when a resource is allocated to a user host, the user host may be identified based on an entity identifier and/or a permission identifier of the user host, to implement a function of sending configuration information (for example, first configuration information and/or second configuration information) to the user host. For specific content of how to configure the entity identifier and/or the permission identifier for the second entity, refer to related descriptions in embodiments of this application. Details are not described herein. Further, when the management host also configures an entity identifier and/or a permission identifier for the first entity, the identifier may be used by the management host to quickly locate and obtain a physical configuration resource in the first entity, to improve efficiency of determining a resource allocation policy or related configuration information (for example, the first configuration information and/or the second configuration information) by the management host.

Optionally, the first entity may include the physical configuration resource of the resource device, and one or more second entities corresponding to the first entity may include a function configuration resource.

In a possible implementation, the first entity may be responsible for device management for reliability, availability, serviceability (Reliability, Availability, and Serviceability, RAS), and hot plug, and other device common management functions. Optionally, the first entity may also carry specific service functions. The physical configuration resource included in the first entity may also be referred to as physical resource configuration information, physical resource management information, or the like. Further, the first entity has a function of managing a physical component of a resource device (for example, a unified bus (unified bus, UB) device). For example, the first entity (Function entity 0) includes link layer information of the managed resource device, address configuration of each port of the resource device (Device), and routing table configuration information. In addition, the first entity may also be responsible for functions such as power consumption configuration of the resource device, resource configuration of the entity (Function entity), and management and configuration of device RAS information. Optionally, the physical configuration resource may specifically include one or more of a resource configuration management resource (which may also be referred to as resource configuration management or resource configuration management information), a common configuration management resource (which may also be referred to as common configuration information), and an interconnection configuration management resource (which may also be referred to as interconnection management information).

For example, the resource configuration management resource (namely, the resource configuration management) may correspond to configuration of various types of IDs, physical resource information, and the like in the resource device. The configuration of various types of IDs may be configuration of IDs (for example, a GUID, an EID, and a PID) of the one or more second entities corresponding to the first entity, and the physical resource information may be a quantity of second entities supported by (that is, corresponding to) the first entity. For example, the resource configuration management resource may be specifically a device resource, for example, a quantity of first entities, a quantity of second entities, and a quantity of ports (Port); a device capability, for example, congestion control and hot plug; or a size of a device configuration space of the first entity and the second entity.

For example, the common configuration management resource (namely, the common configuration information) may correspond to a feature supported by the resource device, an enable switch, and a common interrupt. The feature supported by the resource device may be a supported size of a packet, size of a page (page), size of an address space of the second entity, and the like. The enable switch may be a switch of some capabilities of the resource device, for example, a fault reporting capability. The common interrupt may be a physical fault interrupt of the resource device. For example, the common configuration information may be specifically a device version ID, a GUID, low power consumption configuration, reset configuration, interrupt configuration, or RAS management configuration. It may be understood that the common configuration management resource may further include other common configuration or another resource. Examples are not enumerated herein.

For example, the interconnection configuration management resource (namely, the interconnection management information) may be physical link management, interconnection address management, and the like for the resource device. The physical link management may be for a link from a port of the resource device to a port of another device, and the interconnection address management may be for a network address configured by the management host for the physical port of the resource device. For example, the interconnection management information may be specifically a device routing table and/or a destination port lookup table.

In a possible implementation, the second entity may be configured to carry a specific service function of the device. Specifically, the function configuration resource included in the second entity is a function configuration resource generated after the physical configuration resource is configured, and is used to provide one or more service functions for the user host, for example, an AI computing function, a memory function, a storage function, and a network function. For example, the function configuration resource may specifically include one or more of an artificial intelligence (artificial intelligence, AI) resource, a memory resource, a storage resource, and a network resource. For example, the function configuration resource includes the artificial intelligence (artificial intelligence, AI) resource, the memory resource, and the network resource. The user host may use the AI resource, the memory resource, and the network resource based on task queue resources in the AI resource, the memory resource, and the network resource. For example, the AI resource is used to perform computing, processing, and the like of an AI task. For example, the AI resource is a processor (CPU), a matrix multiplier, or a neural network processing unit (NPU). The memory resource is used to temporarily store instructions or data required in a computing process of a system (namely, the device resource management system in embodiments of this application, which is referred to as a system for ease of description below), and exchange data with another storage, and may be used as a storage medium for temporary data of an operating system or another running program. For example, the memory resource is one or more of a dynamic random access memory (DRAM), a static random access memory (SRAM), and a synchronous dynamic random access memory (SDRAM). The network resource is used to provide a network service for the system, to implement communication between the system and a network. For example, the network resource is a router, a switch, or a network interface card (network card). After the system is powered off, content stored in the storage resource is not lost, and the storage resource may be used for long-term storage of instructions and data related to running of the system, for example, a startup program, an operating system, an application program, and data. Specifically, the storage resource may include one or more of a flash memory (for example, a NAND flash memory or a NOR flash memory), a universal flash storage (universal flash storage, UFS), an embedded multi-media card eMMC, a universal flash storage-based multi-chip package uMCP memory, an embedded multi-media card multi-chip package eMCP memory, a solid-state drive (SSD), and the like. It may be understood that, before using the foregoing resources, the user host may first perform enabling, reset control, capability and basic configuration, address space allocation, and interrupt configuration on the one or more second entities included in the resource device, to determine configuration of the AI resource, the memory resource, and the network resource in the resource device.

For example, function entities in the resource device (for example, the physical component) are coded based on a natural sequence, starting from 0, and the codes need to be consecutive. For example, one physical component implements n function entities, and an x^{th} function entity is numbered as a function entity x-1 (x-1∈[0, n-1]). In other words, the function entities are coded into a function entity 0, a function entity 1, ..., and a function entity n-1. The function entity 0 is the first entity in this embodiment of this application, and function entities other than the function entity 0 is the second entities in this embodiment of this application. Further, the first entity and the second entity in this embodiment of this application may be understood as units into which the resource device divides the resource of the resource device. The resource device allows the user host to divide the resource at a finer granularity, and some function entities may provide services based on configuration of a same type of resource. It should be noted that, although a plurality of second entities (for example, function entities 1, 2, and 3) are configured and managed by the function entity 0, the resource device does not require the second entities (for example, the function entities 1, 2, and 3) to have a same function.

In a possible implementation, in the resource device (for example, the physical component), the first entity (Function entity 0) is mandatory, and in addition to having a device resource corresponding to a function, the first entity may be further responsible for configuration and management at a network layer and a link layer of a physical device, and configuration and management on other second entities (Function entity 1, ..., and Function entity N-1). For example, software may configure information about the network layer and the link layer through an interface provided by the function entity 0.

In a possible implementation, the physical configuration resource included in the first entity (Function entity 0) may be carried in a register of the first entity. In other words, the first entity may include a plurality of register groups, and the register groups are used to store different management information, configuration information, or the like. For example, the first entity may include a function entity control capability (Function entity control capability) register group. The register group may provide a configuration interface of the first entity and/or the second entity (Function entity), and the register group may describe a quantity of managed function entities, and an overall enable state of the function entities.

For example, under management of a hypervisor (for example, management software running on the management host), some first entities and/or second entities (Function entity) may be allocated to a virtual machine for use, to reduce intervention of the hypervisor in a service data flow, and achieve I/O performance that is almost the same as that of a physical machine. A data plane of the function entity can directly interact with the virtual machine. For security purposes, a management plane needs to be controlled by the hypervisor. The data plane may include memory-mapped (Memory-mapped I/O, MMIO) access, an interrupt, and a device service data flow. The management plane mainly means management on the function entities of the device, which is completed through access to a configuration space. Different function entities of one resource device may be allocated to different virtual machines for use. A function entity may also be unloaded from a virtual machine. After a series of security processing (for example, function entity reset), the function entity is re-allocated to another virtual machine. The function entities do not affect each other, and have specific security isolation. Function entities of one resource device may have different functions. For example, one function entity has a network function, and one function entity has a storage function.

It may be understood that, based on a resource device model that separates the physical configuration resource from the function configuration resource in this embodiment of this application, after the resource device is pooled, each user host does not need to manage the resource configuration management resource, the common configuration management resource, and the interconnection configuration management resource of the resource device, and only needs to use the AI resource, the memory resource, and the network resource in the resource device. The user host may use a second entity or communicate with a second entity through a communication channel established for a first entity corresponding to the second entity, that is, the user host may use the function configuration resource of the resource device or communicate with the function configuration resource through a communication channel established for the physical configuration resource of the resource device.

The foregoing describes the related architecture of the device resource management system in embodiments of this application. For ease of understanding, the following further describes a method and a procedure related to the device resource management system in embodiments of this application.

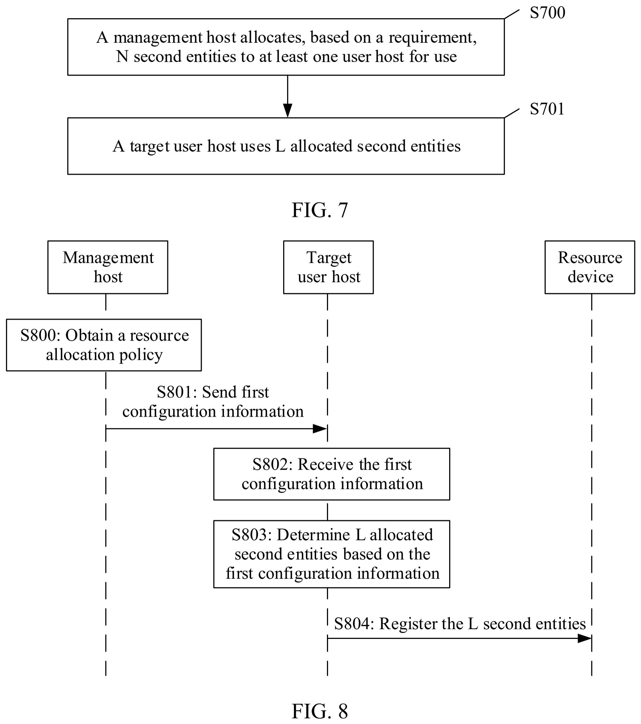

FIG. 7 is a schematic flowchart of a device resource management method according to an embodiment of this application. The method may be applied to the management host in FIG. 3a or FIG. 5 and any one of the at least one user host. In other words, the management host in FIG. 3a or FIG. 5 and any one of the at least one user host may be configured to support and perform some or all related steps shown in FIG. 7. The following step S700 and step S701 are included.

Step S700: The management host allocates, based on a requirement, N second entities to the at least one user host for use.

The management host is configured to manage the at least one user host and at least one resource device in a device resource management system, and allocate a resource of the at least one resource device to the at least one user host. Each of the at least one resource device includes a first entity and one or more second entities (namely, at least one second entity), the first entity includes a physical configuration resource, the one or more second entities include a function configuration resource generated after the physical configuration resource is configured, and the at least one resource device includes at least one first entity and the N second entities in total. For example, the management host may allocate the N second entities to the at least one user host based on a requirement (for example, a function requirement or a bandwidth requirement) or a determined resource allocation policy. L second entities may be allocated to a target user host, the L second entities correspond to Q first entities in the at least one first entity, and the target user host may be any one of the at least one user host. It may be understood that one requirement may correspond to one or more second entities of one resource device, or may correspond to a plurality of second entities of a plurality of resource devices. In other words, the management host may allocate one or more second entities included in one resource device to a user host, to meet a requirement of the user host. When a requirement of a user host can be met only by using second entities in different resource devices, the management host may allocate the second entities to the user host, to meet the requirement of the user host.

In a possible implementation, a target resource device in the at least one resource device includes P second entities in the N second entities, and a specific manner in which the N second entities are allocated, based on the requirement, to the at least one user host for use may be: allocating the P second entities of the target resource device to the at least one user host for use. The L second entities allocated to the target user host include a part or all of the P second entities of the target resource device, the L second entities are from a same resource device or different resource devices in the at least one resource device, and P is a positive integer greater than or equal to 1 and less than or equal to N.

For example, a manner in which the management host allocates the P second entities included in the target resource device to the at least one user host may be: when P is equal to 1, allocating the P second entities to the target user host for use; or when P is equal to 1, allocating, in a first period of time, the P second entities to the target user host for use, and allocating, in a second period of time, the P second entities to another user host for use, where the another user host is a user host other than the target user host in the at least one user host, and the first period of time is different from the second period of time, that is, the management host may allocate the second entities included in the target resource device to different user hosts in different periods of time; or when P is greater than 1, allocating the P second entities to the target user host for use; or when P is greater than 1, allocating S second entities in the P second entities to the target user host for use, and allocating a part or all of the other (P-S) second entities in the P second entities to another user host for use, where the another user host is a user host other than the target user host in the at least one user host, that is, the management host may allocate the second entities included in the resource device to a same user host or different user hosts.

In a possible implementation, the device resource management system may further include a switch device, and the switch device may connect the at least one user host, the management host, and the at least one resource device in the system. The management host may configure a network address for each of physical ports of the at least one user host, the at least one resource device, and the switch device, so that transmission routing of a communication message in the system can be determined based on the network addresses. For related descriptions, refer to the related content in the foregoing architecture descriptions. Details are not described herein again.

Optionally, globally unique identifiers (GUID) and/or entity identifiers (EID) may be configured for the N second entities included in the at least one resource device, so that the user host in the system can distinguish between different second entities based on the GUIDs or the EIDs. For related descriptions, refer to the related content in the foregoing architecture descriptions. Details are not described herein again.

Optionally, the management host may further configure a permission identifier (namely, a first permission identifier) for each of the N second entities included in the at least one resource device, to implement access control over different second entities. Correspondingly, the management host may configure permission identifiers (namely, second permission identifiers) for a plurality of user hosts in the system, to determine, based on the first permission identifier and the second permission identifier, whether a user host corresponding to the first permission identifier has permission to access a second entity corresponding to the second permission identifier.

Optionally, when allocating the N second entities included in the at least one resource device to the at least one user host, the management host may first determine the L second entities (namely, L second entities included in the target resource device, where there may be one or more target resource devices) from the N second entities, determine the target user host (there may be one or more target user hosts) from the at least one user host, and then send configuration information (namely, first configuration information) of the L second entities to the target user host to notify the target user host to establish communication channels to the L second entities. The first configuration information may include information such as the GUID, the EID, and the PID.

Optionally, after allocating the L second entities to the target user host, the management host may alternatively reclaim the L second entities based on an actual situation. For example, the management host may send other configuration information (namely, second configuration information) of the L second entities to the target user host, to notify the target user host to deregister the communication channels to the L second entities. The second configuration information may include information such as the GUID and the EID.

Step S701: The target user host uses the L allocated second entities.

Before using the L second entities, the target user host may first establish, based on the first configuration information sent by the management host and the Q first entities corresponding to the L second entities, the communication channels to the L second entities, so that the target user host can use the L second entities through the communication channels.

Optionally, when using the L second entities, if the target user host receives the second configuration information sent by the management host, the target user host may deregister the communication channels to the L second entities, to release the L second entities. Therefore, the management host may allocate the L second entities to another user host.

Optionally, when a user host (for example, the target user host) wants to use a second entity of a resource device, the user host may submit an application to the management host, configure a register of the second entity after obtaining access permission, and then use a resource corresponding to the second entity.

In a possible implementation, before step S700, the device resource management method further includes step S702: The management host scans a domain for devices, and allocates a network address to a physical port of each device. In this way, transmission routing of a communication message between the devices in the domain can be determined based on the network addresses. For example, when the target user host sends a packet to a second entity in the L second entities, transmission routing of the packet may be determined based on network addresses of a physical port of the target user host and a physical port of a resource device (one of the at least one resource device) in which the second entity is located.

It should be noted that, to start a bus in the device resource management system, the management host needs to complete scanning and discovery (or referred to as enumeration) of the devices in the domain. Enumeration aims at scanning the domain from a start point (the management host, or referred to as an FM) to discover and identify the devices, drawing a topology structure, and providing necessary information for subsequent route configuration and resource allocation. An enumeration result needs to be exhaustive and non-redundant. For example, enumeration of the entire domain is initiated by the management host (FM). The FM may send an enumeration message at a transport layer, and then receive an enumeration response message replied by another device, to obtain device information and discover all devices (including the resource device, the user host, and the like) in the domain and a topology relationship.

Optionally, when a device is enumerated for the first period of time, and no network address is configured for the device, the management host may configure network addresses for all connected devices based on an enumeration configuration message (or referred to as an enumeration management message). For example, a packet of the enumeration configuration message may carry GUID information of the device. When receiving the packet for configuring the network address, the device may first compare the GUID information in the packet with a GUID of the device, and accept a network address configuration request after determining that the GUID information in the packet matches the GUID of the device, to prevent the network address from being incorrectly configured.

It may be understood that each domain has its boundary. Within the scope of a domain boundary, there is typically a management host (FM), responsible for enumeration, discovery, management, and allocation of all devices within the domain. In addition, a domain may also function as a node, and connect to another domain through an external port, for example, connect to a larger domain. In this case, the external port serves as a boundary of the domain. When discovering the external port through scanning, the management host (FM) within the domain does not continue to enumerate devices beyond it. For an FM in an upper-level domain, an entire lower-level domain may be considered as a node. The FM in the upper-level domain discovers the node during enumeration, but does not continue to enumerate devices in the lower-level domain or directly manage devices in the node. Instead, the FM in the upper-level domain communicates with an FM in the node, to implement application, registration, access, and the like of each device in the node.

In addition, when completing discovery (enumeration) of the devices in the domain, the management host (FM) can obtain a topology relationship diagram of an entire network, so that the FM can perform route computation based on an interconnection relationship between the devices to obtain a complete routing table, and implement interconnection of communication channels between the devices. For example, route computation may be locally implemented by the FM in a stage-by-stage routing manner. Each device maintains a local routing table. The routing table may describe a relationship between an address of a destination device and a local port (Port), to indicate local ports that can reach the destination device. Therefore, after a packet is sent from the port, devices on a subsequent path may forward the packet hop by hop according to the local routing table, and the packet finally reaches the destination device. It may be understood that route computation may be implemented by traversing all reachable paths. A core operation is to deeply traverse all paths, find all reachable paths that can reach the destination device, and support features such as a shortest path, multiple paths, and loop breaking. Further, after global route computation is completed, the FM may deliver the network addresses allocated to the devices and route configuration to each device for configuration. After configuration is completed, interconnection of the entire network may be implemented, and the devices in the network may access and communicate with each other based on the network addresses of the devices.

For ease of understanding, the following further describes resource registration and deregistration processes in the foregoing device resource management method. First, the resource registration process is described. FIG. 8 is a schematic flowchart of resource registration according to an embodiment of this application. The resource registration procedure may be applied to the management host, the user host, and the resource device in FIG. 3a or FIG. 5. In other words, the management host, the user host, and the resource device in FIG. 3a or FIG. 5 may be configured to support and perform some or all related steps shown in FIG. 8. The following step S800 to step S804 in FIG. 8 are included.

Step S800: The management host obtains a resource allocation policy.

The resource allocation policy may be determined by management software FM based on a requirement of each user host and a status of the resource device in a domain. Further, it may be specified that one or more second entities of a resource device in a plurality of resource devices in the domain may be allocated to a host for use. For example, the management host may determine, according to the resource allocation policy, to allocate L second entities in N second entities to a target user host in at least one user host, where L is a positive integer less than or equal to N. Alternatively, it may be understood as that the management host may allocate the N second entities to the at least one user host according to the resource allocation policy, and the L second entities may be allocated to the target user host. The L second entities correspond to Q first entities in at least one first entity, and the target user host may be any one of the at least one user host. For example, the management host may allocate a second entity 1 and a second entity 2 of a 3^{rd} resource device (for example, a device 2) in five resource devices to a host 0 in four user hosts.

Optionally, the management host may determine the resource allocation policy based on a resource requirement of the target user host, or may determine the resource allocation policy based on a policy file (a requirement file) input by an administrator. For example, the management host may obtain the resource requirement of the target user host, then determine the resource allocation policy based on the resource requirement, and further determine the L second entities, in the N second entities, to be allocated to the target user host. It may be understood that, in addition to obtaining the resource requirement of the target user host, the management host may further obtain a resource requirement of another user host in a system, and determine the resource allocation policy based on resource requirements of a plurality of user hosts. This is not specifically limited herein. It should be noted that, when allocating the N second entities, the management host may make a decision by comprehensively considering a status of the second entity (or a resource device to which the second entity belongs). For example, if a fault occurs in a second entity, the management host may not allocate the second entity until the fault is handled. It may be understood that one requirement may correspond to one or more second entities of one resource device, or may correspond to a plurality of second entities of a plurality of resource devices. In other words, the management host may allocate one or more second entities included in one resource device to a user host, to meet a requirement of the user host. When a requirement of a user host can be met only by using second entities in different resource devices, the management host may allocate the second entities to the user host, to meet the requirement of the user host.

Optionally, before determining an allocation solution, the management host may first scan the entire domain for devices, to determine a quantity of each type of devices, and further discover the at least one user host and the at least one resource device (further discover a switch device) in the system; and further allocate a network address to a physical port of each device, to provide a basis for subsequently determining the allocation solution for the resource device and transmission routing of a communication message. For example, the management host may send an enumeration message in the device resource management system. This manner is equivalent to that the management host actively broadcasts "this is the management host" to a surrounding resource device, user host, switch device, and the like. Then, correspondingly, after receiving the enumeration message, the resource device, the user host, and the switch device in the system may send enumeration response messages to the management host for the enumeration message. This manner is equivalent to reporting "this is xx device" to the management host. Finally, after receiving the enumeration response messages sent by different devices, the management host may determine the at least one user host and the at least one resource device (may further determine the switch device). Optionally, the enumeration response messages sent by the different devices may carry respective GUIDs, so that the management host can distinguish between the different devices and determine device types of the different devices.

Step S801: The management host sends first configuration information to the target user host.

It may be understood that the management host may notify, via the first configuration information, the target user host to register the L allocated second entities.

In a possible implementation, before sending the first configuration information, the management host may configure entity identifiers and/or permission identifiers for the L second entities. It may be understood that the management host may also configure EIDs and/or PIDs for a plurality of second entities included in the plurality of resource devices.

Optionally, the first configuration information may include information such as GUIDs, the EIDs, and the PIDs of the L second entities. It may be understood that the first configuration information may alternatively include a network address of a physical port of a resource device to which the L second entities belong, so that the target user host can communicate with the resource device based on the network address, to find the L second entities. It may be further understood that, before sending the first configuration information, the management host may configure a network address for a physical port of the target user host, and then send the first configuration information to the target user host based on the network address.

Optionally, before sending the first configuration information, the management host may configure a network address for the target user host, and send the first configuration information to the target user host based on the network address of the target user host. For example, the target user host may have a plurality of physical ports (port). For example, the target user host has four physical ports, but five network addresses may be configured for the target user host. In this case, one network address is configured for each of the four physical ports, one virtual network address is further configured, and the five addresses are all network addresses, and may be used to locate the target user host. In other words, both the network address of the physical port and the virtual network address may be used to locate the target user host. Therefore, the management host may not only configure the network address for the physical port of the target user host, but also configure the virtual network address for the target user host. Correspondingly, the management host may send the first configuration information based on the network address of the physical port, and may also send the first configuration information based on the virtual network address. This is not specifically limited in embodiments of this application.

Step S802: The target user host receives the first configuration information sent by the management host.

Step S803: The target user host determines the L allocated second entities based on the first configuration information.

Step S804: The target user host registers the L second entities.

Optionally, when registering the L second entities, the target user host may separately create local devices for the L second entities, load device drivers for the local devices, and then establish communication channels from the local devices to the L second entities by using the device drivers. It may be understood that a device type of the local device created for the second entity is the same as a device type corresponding to the second entity, and the device type may be a storage device, a network device, or the like. For example, the target user host may determine, based on the globally unique identifier of the second entity, the device type corresponding to the second entity, and may further determine a device type of a to-be-created local device.

Optionally, after registering the L second entities, the target user host may enable and use the L second entities. For example, after registering the L second entities, the target user host may send configuration information to the L second entities, to initialize the L second entities, for example, allocate an interrupt, allocate a memory base address, and allocate other configuration related to a device type (or referred to as a service, for example, a graphics card, a hard disk, or a network card). Finally, the target user host may normally use the L second entities.

Optionally, in step S800, the target user host may first report the resource requirement of the target user host to the management host. For example, the resource requirement reported by the target user host may be a quantity of required second entities for a specific device type or specific device types. This is not specifically limited herein.

For example, in the foregoing resource registration process, the management host may discover, allocate, and manage and control devices by using internally deployed management software (for example, a resource manager, resource manager) used for management for a device resource pool. The resource device may communicate, via an internally deployed fabric attach device local framework (fabric attach device local framework, FAD local framework) component, with the management software deployed in the management host, to implement resource reporting and registration. Similarly, the user host may communicate, via an internally deployed fabric attach device remote framework (FAD remote framework) component, with the management software deployed in the management host about device information and resources, and is responsible for creating the local devices. Optionally, communication between the foregoing components may be performed at a transport layer. For ease of understanding, the following provides example description about behavior of devices in the resource registration process.

On the management host side:
(1) scan the domain for the devices, allocate a network address to a port of each discovered device, and allocate an EID and/or a PID to the second entity;
(2) manage, by using the management software for management for the device resource pool, resources reported by the resource device by using the FAD local framework component, where for example, the management software communicates with the FAD local framework component, and manages and controls function components of a function entity (namely, the second entity) by using the device locally created by the resource device; and
(3) determine the resource allocation policy, and allocate, by using the management software, a second entity in the device resource pool to a user host (namely, the target user host) that is to register and use the capability.

On the resource device:
(1) enable a function entity (function entity, that is, the second entity) through a driver interface of the resource device, and create a local device; and
(2) add a driver (FAD local device driver) to the newly created local device, initialize the local device as a FAD local device (local device), and register the FAD local device with a FAD local service (local server) framework.

On the user host:
(1) use the FAD remote framework component deployed in the user host to obtain information about the resource device based on a communication address of the resource device and description of the resource device that are specified by the management host;
(2) use the FAD remote framework component of the user host to create a FAD remote device based on the obtained information about the resource device, that is, create a device in a local operating system, and register the device with a bus (bus) constructed by the operating system for management and use;
(3) load a device driver for the FAD remote device, and initialize the FAD remote device as a function device (function device); and
(4) use, at a function layer, an interface provided by the function device, to use the second entity of the resource device.

It should be noted that, after step S800 to step S804 in the foregoing resource registration procedure, a resource deregistration procedure may be further included, that is, after the target user host registers and uses the resource, the target user host may also deregister the resource, so that another user host may also register and use the resource.

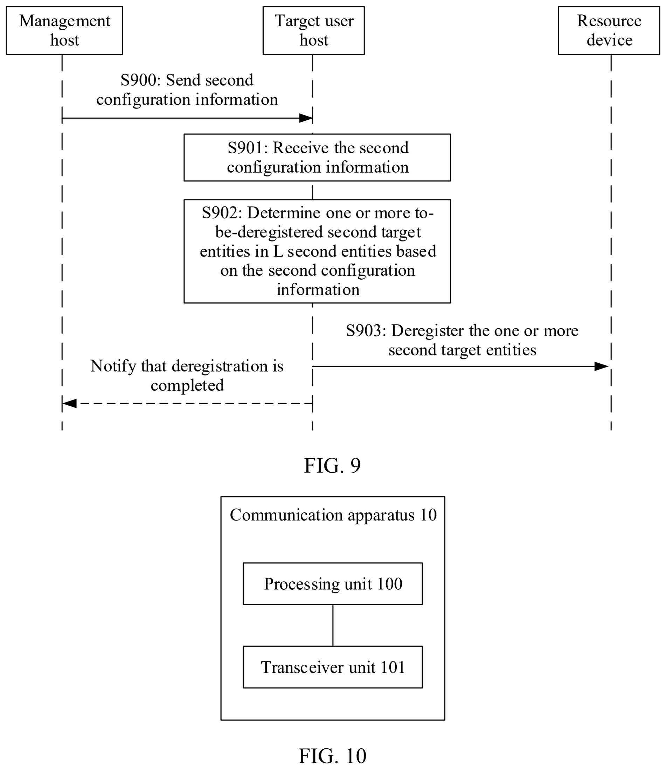

Then, the following describes the resource deregistration process. FIG. 9 is a schematic flowchart of resource deregistration according to an embodiment of this application. The resource deregistration procedure may be applied to the management host, the user host, and the resource device in FIG. 3a or FIG. 5. In other words, the management host, the user host, and the resource device in FIG. 3a or FIG. 5 may be configured to support and perform some or all related steps shown in FIG. 9. The following step S900 to step S903 in FIG. 9 are included.

Step S900: The management host sends second configuration information to a target user host.

Optionally, the management host may notify, via the second configuration information, the target user host to deregister one or more second target entities in L allocated second entities in step S803. For example, when a resource allocation policy changes or the resource device (or the second entity) is faulty, the management host may reclaim one or more second entities currently allocated to the target user host, to reallocate, to each user host according to a new resource allocation policy, one or more second entities that can meet a requirement. It may be understood that the second configuration information may be sent based on a network address of a physical port of the target user host.

Optionally, when the resource allocation policy changes, the management host may reclaim all currently allocated second entities in a device resource management system, that is, send the second configuration information to the target user host for all the second entities. The target user host may be any one or more user hosts in the system. Alternatively, the management host may compare the new resource allocation policy with the old resource allocation policy, to determine second entities that do not need to be reclaimed and second entities that need to be reclaimed. Then, the management host sends the second configuration information to the target user host for the second entities that need to be reclaimed, to notify the target user host to deregister the second entities that need to be reclaimed. In other words, the one or more second target entities may be all the currently allocated second entities, or may be a part of entities that need to be reclaimed in all the currently allocated second entities. The second configuration information may include information such as GUIDs and EIDs of the one or more second target entities, and may further include PID information. It should be noted that, if the resource allocation policy changes, the management host may reset the second entity, clear information such as an EID and a PID of the second entity, and then send the second configuration information. It may be understood that the management host may reset all second entities, or may reset only the second entity that needs to be reclaimed. This is not specifically limited herein. Optionally, when the resource allocation policy changes, the one or more second target entities may be reset, and the entity identifiers (for example, EIDs) and/or the permission identifiers (for example, PIDs) of the one or more second target entities are invalidated. For example, accompanying information (for example, a value) bound to the EID or the PID of the second target entity may be set to 0, so that the second target entity is temporarily invalid. Alternatively, a value of the EID or the PID of the second target entity is directly set to be all 0s, so that the second target entity is temporarily invalid.

Optionally, when the resource device (or the second entity) is faulty, the management host may reclaim the allocated resource device (or the second entity) that is faulty, to ensure that the user host can normally process a task or data. Whether the resource device (or the second entity) is faulty may be discovered by the management host by periodically or aperiodically scanning a domain for devices, or may be discovered by a user host, a switch device, or another resource device that communicates with the resource device (or the second entity) and reported to the management host. This is not specifically limited herein.

Step S901: The target user host receives the second configuration information sent by the management host.

Step S902: The target user host determines the one or more to-be-deregistered second target entities in the L second entities based on the second configuration information.

Step S903: The target user host deregisters the one or more second target entities.

It may be understood that the process in which the target user host deregisters the second entity may be an inverse process of the process in which the target user host registers the second entity. After receiving the second configuration information, the target user host may unload device drivers. The device drivers may be drivers corresponding to local devices created by the target user host for the one or more second entities. When unloading the device drivers, the target user host may reclaim driver resources, memory resources, interrupt resources, and the like that are configured to use these second entities. Then, the target user host may delete the local devices created for the one or more second entities and deregister communication channels. The local devices are node devices locally established by the target user host to use the second entities. It may be understood that, after deregistering the communication channels, the target user host releases the second entities, that is, does not occupy the resources, so that the management host can allocate the second entities to another user host (if the second entities or a resource device to which the second entities belong is not faulty).

For example, in the foregoing resource deregistration process, management software that is deployed in the management host and that is managed by a device resource pool, a fabric attach device local framework (fabric attach device local framework, FAD local framework) component deployed in the resource device, and a fabric attach device remote framework (FAD remote framework) component deployed in the user host may communicate with each other at a transport layer, to complete resource deregistration. For ease of understanding, the following describes behavior of each device in the resource deregistration process by using an example.

The management host is configured to:
(1) reclaim the allocated resource of the resource device, and set a state of the resource device (or the second entity) to a to-be-used state; and
(2) communicate with the FAD local framework component in the resource device by using the management software; and when the resource device (or the second entity) is not used, reset the resource device (or the second entity), and clear the state and information of the device.

The resource device is configured to:
(1) use the FAD local framework component in the resource device to receive a control message from an FM, and configure and manage the second entity of the resource device; and
(2) detect and manage a link layer (link layer) and a network layer (network layer); and when an exception that cannot be handled occurs in the resource device (or the second entity), use the FAD local framework component to actively notify the FM to disable the resource of the resource device.

The user host is configured to:
(1) when the user host no longer uses the resource of the resource device, reclaim the resource allocated in a local operating system, and disconnect a connection established with the local device of the resource device, for example, unload the device driver and destroy a local device structure; and
(2) when the user host no longer uses the resource of the resource device, communicate with the management software of the FM by using the FAD remote framework component, to notify the FM that the user host no longer uses the resource of the resource device.

In conclusion, in embodiments of this application, resource pooling of the device can be implemented, a plurality of user hosts sharing a resource of one resource device are supported, and a resource granularity of the resource device is a VF-level granularity (a resource granularity in conventional technologies is a PF-level granularity). In other words, the resource can be allocated to the user host at a finer granularity, so that the resource can be flexibly allocated based on a requirement of the user host, and resource utilization is high. In addition, the management host may manage a management resource of the resource device, and the user host does not need to manage the management resource of the resource device, to reduce complexity of the user host. The system may transmit a packet by using a network address-based routing mechanism. When a quantity of user hosts is increased, a routing table may be extended to support a large quantity of user hosts. This implements good scalability. Further, the management host in the system may dynamically allocate the resource of the resource device. This is more flexible. In addition, in the system, a mechanism of transmitting a packet by using a network address-based routing table is used, so that the switch can perform transmission based on network addresses of a source and a destination without additionally performing complex table query and translation, to reduce a delay and bandwidth overheads.

It should be noted that, for related descriptions of a procedure of the device resource management method described in embodiments of this application, refer to related descriptions in the foregoing embodiments. Details are not described herein again.

The foregoing content describes the device resource management system and the related method provided in this application. To facilitate implementation of the foregoing solutions in embodiments of this application, embodiments of this application further provide corresponding apparatuses.

In this application, the apparatus is divided into functional modules according to the foregoing system and method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely a logical function division. During actual implementation, another division manner may be used. The following describes apparatuses in embodiments of this application with reference to the accompanying drawings.

FIG. 10 is a diagram of a structure of a communication apparatus according to an embodiment of this application. The communication apparatus 10 may be configured to implement functions of the management host in the method embodiments, and therefore can also implement beneficial effect of the method embodiments. In this embodiment of this application, the communication apparatus 10 may be the management host shown in FIG. 3a or FIG. 5, or may be a module (for example, a chip) used in the management host.

As shown in FIG. 10, the communication apparatus 10 may include a processing unit 100 and a transceiver unit 101. The communication apparatus may be used in a management host in a device resource management system. The device resource management system includes at least one user host, at least one resource device, and the management host, each of the at least one resource device includes a first entity and one or more second entities, the first entity includes a physical configuration resource, the one or more second entities include a function configuration resource generated after the physical configuration resource is configured, the at least one resource device includes at least one first entity and N second entities in total, and N is an integer greater than 1.

The processing unit 100 is configured to obtain a resource allocation policy. The resource allocation policy is used to determine to allocate L second entities in the N second entities to a target user host in the at least one user host, and L is a positive integer less than or equal to N.

The transceiver unit 101 is configured to send first configuration information to the target user host, where the first configuration information is used to notify the target user host to register the L second entities.

In a possible implementation, the transceiver unit 101 is further configured to scan the device resource management system, to discover the at least one user host and the at least one resource device.

In a possible implementation, the transceiver unit 101 is further configured to: send an enumeration message in the device resource management system, where the enumeration message is used to discover a device in the device resource management system;
receive enumeration response messages separately sent by the at least one user host and the at least one resource device for the enumeration message; and
determine the at least one user host and the at least one resource device based on the enumeration response messages.

In a possible implementation, the processing unit 100 is specifically configured to: obtain a resource requirement of the target user host in the at least one user host; and
determine the resource allocation policy based on the resource requirement.

In a possible implementation, the processing unit 100 is further configured to configure entity identifiers and/or permission identifiers for the L second entities.

In a possible implementation, the first configuration information includes one or more of the following items: globally unique identifiers, entity identifiers, or permission identifiers of the L second entities.

In a possible implementation, the transceiver unit 101 is further configured to send second configuration information to the target user host. The second configuration information is used to notify the target user host to deregister one or more second target entities in the L second entities.

In a possible implementation, the second configuration information includes one or more of the following items: globally unique identifiers, entity identifiers, or permission identifiers of the one or more second target entities.

In a possible implementation, the transceiver unit 101 is specifically configured to: when the resource allocation policy changes, send the second configuration information to the target user host; or
when the one or more second target entities or a resource device to which the one or more second target entities belong is faulty, send the second configuration information to the target user host.

In a possible implementation, the processing unit 100 is further configured to: when the resource allocation policy changes, reset the one or more second target entities, and clear the entity identifiers and/or the permission identifiers of the one or more second target entities.

In a possible implementation, the processing unit 100 is further configured to configure a network address for a physical port of the target user host.

The transceiver unit 101 is specifically configured to send the first configuration information to the target user host based on the network address of the physical port of the target user host.

The processing unit 100 may be specifically configured to allocate, based on a requirement, the N second entities to the at least one user host for use. The target user host obtains L allocated second entities, the L second entities correspond to Q first entities in the at least one first entity, the target user host is any one of the at least one user host, and L is a positive integer less than or equal to N.

In a possible implementation, a target resource device in the at least one resource device includes P second entities in the N second entities, and the processing unit 100 is specifically configured to:
allocate the P second entities to the at least one user host for use. The L second entities allocated to the target user host include a part or all of the P second entities, and the L second entities are from a same resource device or different resource devices in the at least one resource device.

In a possible implementation, the processing unit 100 is specifically configured to:
when P is equal to 1, allocate the P second entities to the target user host for use; or
when P is equal to 1, allocate, in a first period of time, the P second entities to the target user host for use, and allocate, in a second period of time, the P second entities to another user host for use. The another user host is a user host other than the target user host in the at least one user host.

In a possible implementation, the processing unit 100 is specifically configured to:
when P is greater than 1, allocate the P second entities to the target user host for use; or
when P is greater than 1, allocate S second entities in the P second entities to the target user host for use, and allocate a part or all of the other (P-S) second entities in the P second entities to another user host for use. The another user host is a user host other than the target user host in the at least one user host.

In a possible implementation, the system further includes a switch device, and the processing unit 100 is further configured to:
connect the at least one user host, the management host, and the at least one resource device via the switch device.

In a possible implementation, physical ports of the at least one user host, the at least one resource device, the management host, and the switch device all are configured with a network address, and the network address is used to determine transmission routing of a communication message in the system.

In a possible implementation, each of the N second entities is configured with a globally unique identifier and/or an entity identifier, the globally unique identifier is used to distinguish between different second entities, and the entity identifier is used to distinguish between different second entities.

In a possible implementation, a first permission identifier is configured for each of the at least one user host, a second permission identifier is configured for each of the N second entities, and access permission of each user host for each second entity is determined based on the first permission identifier and the second permission identifier.

In a possible implementation, the physical configuration resource includes one or more of a common configuration management resource, a resource configuration management resource, and an interconnection configuration management resource, and the function configuration resource includes one or more of an artificial intelligence resource, a memory resource, and a network resource.

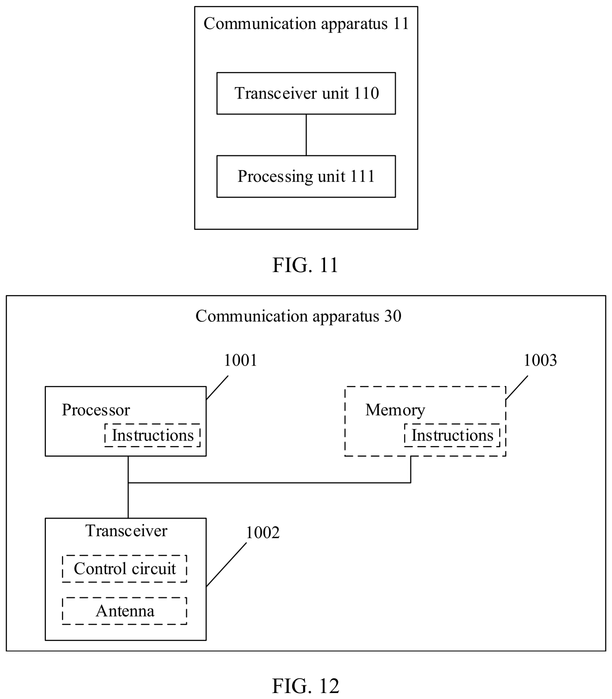

FIG. 11 is a diagram of a structure of another communication apparatus according to an embodiment of this application. The communication apparatus 11 may be configured to implement functions of the target user host in the method embodiments, and therefore can also implement beneficial effect of the method embodiments. In this embodiment of this application, the communication apparatus 11 may be any one of the one or more user hosts shown in FIG. 3a or FIG. 5, or may be a module (for example, a chip) used in the user host.

As shown in FIG. 11, the communication apparatus 11 may include a transceiver unit 110 and a processing unit 111. The communication apparatus may be used in a target user host in a device resource management system. The device resource management system includes at least one user host, at least one resource device, and a management host, each of the at least one resource device includes a first entity and one or more second entities, the first entity includes a physical configuration resource, the one or more second entities include a function configuration resource generated after the physical configuration resource is configured, the target user host is any one of the at least one user host, the at least one resource device includes at least one first entity and N second entities in total, and N is an integer greater than 1.

The transceiver unit 110 is configured to: receive first configuration information of L second entities that is sent by the management host, and determine the L allocated second entities based on the first configuration information, where L is a positive integer less than or equal to N, the L second entities are second entities in the N second entities, the first configuration information is used to notify the target user host to register the L second entities and separately establish communication channels to the L second entities based on Q first entities, and the Q first entities are first entities, in the at least one first entity, corresponding to the L second entities.

The processing unit 111 is configured to: register the L second entities, separately establish the communication channels to the L second entities based on the Q first entities, and use the L second entities through the communication channels.

In a possible implementation, the processing unit 111 is specifically configured to: create local devices for the L second entities; and
load device drivers for the local devices, and establish communication channels from the local devices to the L second entities by using the device drivers.

In a possible implementation, the processing unit 111 is further configured to enable and use the L second entities.

In a possible implementation, the transceiver unit 110 is further configured to: receive an enumeration message sent by the management host; and
send an enumeration response message to the management host for the enumeration message.

In a possible implementation, the transceiver unit 110 is further configured to send a resource requirement to the management host.

In a possible implementation, the transceiver unit 110 is further configured to receive second configuration information sent by the management host, and determine one or more to-be-deregistered second target entities in the L second entities based on the second configuration information. The second configuration information is used to notify the target user host to deregister the one or more second target entities.

The processing unit 111 is further configured to deregister the one or more second target entities in response to the second configuration information.

In a possible implementation, the processing unit 111 is specifically configured to:
create local devices for the L second entities based on the first configuration information of the L second entities that is sent by the management host; and
load device drivers for the local devices, and establish communication channels from the local devices to the L second entities by using the device drivers.

In a possible implementation, the processing unit 111 is specifically configured to:
unload device drivers loaded for local devices, where the local devices are device nodes created for the one or more second target entities; and
delete the local devices.

In a possible implementation, physical ports of the at least one resource device and the target user host all are configured with a network address, and the transceiver unit 110 is further configured to:
send a communication message to any one of the L second entities through the communication channel, where transmission routing of the communication message is determined based on the network addresses of the physical ports of the at least one resource device and the target user host.

In a possible implementation, the second configuration information includes one or more of the following items: globally unique identifiers, entity identifiers, or permission identifiers of the one or more second target entities.

In a possible implementation, the first configuration information includes one or more of the following items: globally unique identifiers, entity identifiers, or permission identifiers of the L second entities.

It may be understood that specific descriptions of the transceiver unit and the processing unit described in the apparatus embodiments are merely examples. For specific functions, steps, or the like of the transceiver unit and the processing unit, refer to the foregoing method embodiments. Details are not described herein again.

The foregoing describes the communication apparatus in embodiments of this application. The following describes a possible product form of the communication apparatus. It should be understood that a product in any form with a function of the communication apparatus described in FIG. 10 or FIG. 11 shall fall within the protection scope of embodiments of this application. It should be further understood that the following description is merely an example, and does not limit a product form of the communication apparatus in embodiments of this application.

In a possible implementation, in the communication apparatus shown in FIG. 10 or FIG. 11, the processing unit 100 or the processing unit 111 may be one or more processors, and the transceiver unit 101 or the transceiver unit 110 may be a transceiver. In embodiments of this application, the processor may be coupled to the transceiver. A connection manner between the processor and the transceiver is not limited in embodiments of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Still further, after the transceiver receives the information, other processing may need to be performed on the information before the information is input into the processor.

FIG. 12 is a diagram of a structure of another communication apparatus according to an embodiment of this application. The communication apparatus 30 may be the communication apparatus 10, the communication apparatus 11, or a chip in the communication apparatus 10 or the communication apparatus 11. FIG. 12 shows only main components of the communication apparatus 30. In addition to a processor 1001 and a transceiver 1002, the communication apparatus 30 may further include a memory 1003 and an input/output apparatus (not shown in the figure).

The processor 1001 is mainly configured to process a communication protocol and communication data, control the communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. An input/output apparatus like a touchscreen, a display, or a keyboard is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The transceiver 1002 may include a receiver and a transmitter. The receiver is configured to perform a receiving function (or operation), and the transmitter is configured to perform a transmitting function (or operation). The transceiver is configured to communicate with another device/apparatus through a transmission medium.

The processor 1001, the transceiver 1002, and the memory 1003 may be connected through a communication bus.

For example, when the communication apparatus 30 is configured to perform the step, the method, or the function performed by the communication apparatus 10, the processor 1001 is configured to obtain a resource allocation policy. The resource allocation policy is used to determine to allocate L second entities in N second entities to a target user host in at least one user host, and L is a positive integer less than or equal to N. The transceiver 1002 is configured to send first configuration information to the target user host. The first configuration information is used to notify the target user host to register the L second entities.

For example, when the communication apparatus 30 is configured to perform the step, the method, or the function performed by the communication apparatus 11, the transceiver 1002 is configured to receive first configuration information sent by a management host, and determine L allocated second entities based on the first configuration information, where L is a positive integer less than or equal to N, the L second entities are second entities in N second entities, the first configuration information is used to notify a target user host to separately establish communication channels to the L second entities based on Q first entities, and the Q first entities are first entities, in at least one first entity, corresponding to the L second entities. The processor 1001 is configured to register the L second entities, separately establish the communication channels to the L second entities based on the Q first entities, and use the L second entities through the communication channels.

It may be understood that for specific descriptions of the processor and the transceiver, refer to descriptions of the processing unit and the transceiver unit shown in FIG. 10 or FIG. 11. Details are not described herein again.

Optionally, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

Optionally, the processor 1001 may store instructions. The instructions may be a computer program. The computer program is run on the processor 1001, to cause the communication apparatus 30 to perform the methods described in the foregoing method embodiments. The computer program may be solidified in the processor 1001. In this case, the processor 1001 may be implemented by hardware.

In an implementation, the communication apparatus 30 may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may further have more components and the like than those in FIG. 12. This is not limited in this embodiment of this application. The foregoing method performed by the processor and the transceiver is merely an example. For specific steps performed by the processor and the transceiver, refer to descriptions in the foregoing method embodiments.

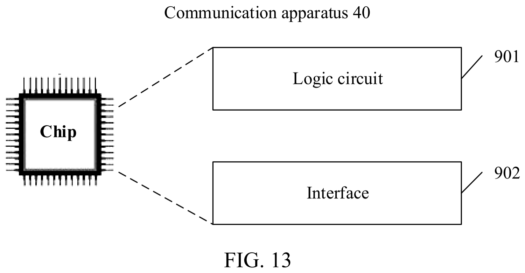

In another possible implementation, in the communication apparatus shown in FIG. 10 or FIG. 11, the processing unit 100 or the processing unit 111 may be one or more logic circuits, the transceiver unit 101 or the transceiver unit 110 may be an input/output interface, which is also referred to as a communication interface, an interface circuit, an interface, or the like. Alternatively, a sending unit may be an output interface, and a receiving unit may be an input interface. Alternatively, the sending unit and the receiving unit are integrated into one unit, for example, an input/output interface. FIG. 13 is a diagram of a structure of another communication apparatus according to an embodiment of this application. As shown in FIG. 13, the communication apparatus 40 includes a logic circuit 901 and an interface 902. In other words, the processing unit 100 or the processing unit 111 may be implemented by using the logic circuit 901, and the transceiver unit 101 or the transceiver unit 110 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 13 is an example in which the communication apparatus 40 is a chip. The chip includes the logic circuit 901 and the interface 902.

In embodiments of this application, the logic circuit may be further coupled to the interface. A specific manner of connection between the logic circuit and the interface is not limited in this embodiment of this application.

For example, when the communication apparatus 40 is configured to perform the method, the function, or the step performed by the communication apparatus 10, the logic circuit 901 is configured to obtain a resource allocation policy. The resource allocation policy is used to determine to allocate L second entities in N second entities to a target user host in at least one user host, and L is a positive integer less than or equal to N. The interface 902 is configured to send first configuration information to the target user host. The first configuration information is used to notify the target user host to register the L second entities.

For example, when the communication apparatus 40 is configured to perform the step, the method, or the function performed by the communication apparatus 11, the interface 902 is configured to receive first configuration information sent by a management host, and determine L allocated second entities based on the first configuration information, where L is a positive integer less than or equal to N, the L second entities are second entities in N second entities, the first configuration information is used to notify a target user host to register the L second entities and separately establish communication channels to the L second entities based on Q first entities, and the Q first entities are first entities, in at least one first entity, corresponding to the L second entities. The logic circuit 901 is configured to register the L second entities, separately establish the communication channels to the L second entities based on the Q first entities, and use the L second entities through the communication channels.

It may be understood that for specific descriptions of the logic circuit 901 and the interface 902, refer to descriptions of the processing unit and the transceiver unit shown in FIG. 10 or FIG. 11. Details are not described herein again.

It may be understood that the communication apparatus shown in this embodiment of this application may implement the method provided in embodiments of this application in a form of hardware or in a form of software. This is not limited in embodiments of this application.

For specific implementations of the embodiment shown in FIG. 13, refer to the foregoing embodiments. Details are not described herein again.

In addition, an embodiment of this application further provides a computer-readable storage medium. The computer-readable storage medium stores computer program code. When a processor executes the computer program code, a computer is caused to perform the method in any one of the foregoing embodiments.

An embodiment of this application further provides a terminal device. The terminal device may exist in a product form of chip. The terminal device includes a processor. The processor is configured to support the terminal device in implementing a corresponding function in the method in any one of the foregoing embodiments. The terminal device may further include a memory. The memory is configured to be coupled to the processor, and stores program instructions and data that are necessary for the terminal device. The terminal device may further include a communication interface, used for communication between the terminal device and another device or a communication network.

An embodiment of this application further provides a computer program product. When the computer program product runs on a computer, the computer is caused to perform the method in any of the foregoing embodiments.

An embodiment of this application provides a chip system. The chip system includes a processor, configured to support a device in implementing functions in any of the foregoing embodiments, for example, generating or processing information in the device resource management method. In a possible design, the chip system further includes a memory, and the memory is configured to store program instructions and data that are necessary for the device. The chip system may include a chip, or may include a chip and another discrete component.

An embodiment of this application provides a server, including a communication interface, a memory, and a processor. The communication interface and the memory are coupled to the processor, the communication interface is used by the server to communicate with another device or a communication network, the memory is configured to store computer program code, the computer program code includes computer instructions, and when the processor reads the computer instructions from the memory, the server performs corresponding functions in the method in any of the foregoing embodiments.

An embodiment of this application provides a vehicle-mounted device, including a communication interface, a memory, and a processor. The communication interface and the memory are coupled to the processor, the communication interface is used by the vehicle-mounted device to communicate with another device or a communication network, the memory is configured to store computer program code, the computer program code includes computer instructions, and when the processor reads the computer instructions from the memory, the vehicle-mounted device performs corresponding functions in the method in any of the foregoing embodiments.

In the foregoing embodiments, descriptions of embodiments have respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to preferred embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like, and may specifically be a processor in the computer device) to perform all or some of the steps of the methods described in embodiments of this application. The foregoing storage medium may include any medium that can store program code, such as a USB flash drive, a removable hard disk, a magnetic disk, an optical disc, a read-only memory (read-only memory, ROM), or a random access memory (random access memory, RAM).

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of this application.

## Claims

1. A device resource management method, applied to a management host in a device resource management system, wherein the device resource management system further comprises at least one user host and at least one resource device, each of the at least one resource device comprises a first entity and at least one second entity, the first entity comprises a physical configuration resource, the at least one second entity comprises a function configuration resource generated after the physical configuration resource is configured, the at least one resource device comprises N second entities in total, N is an integer greater than 1, and the method comprises:
sending first configuration information to a target user host, wherein the first configuration information is used to notify the target user host to register the L second entities, the target user host is one of the at least one user host, the L second entities are second entities allocated from the N second entities to the target user host, and L is a positive integer less than or equal to N.

2. The method according to claim 1, wherein the method further comprises:
scanning the device resource management system, to discover the at least one user host and the at least one resource device.

3. The method according to claim 2, wherein the scanning the device resource management system, to discover the at least one user host and the at least one resource device comprises:
sending an enumeration message in the device resource management system, wherein the enumeration message is used to discover the at least one user host and the at least one resource device in the device resource management system;
receiving enumeration response messages separately sent by the at least one user host and the at least one resource device for the enumeration message; and
determining the at least one user host and the at least one resource device based on the enumeration response messages.

4. The method according to any one of claims 1 to 3, wherein the method further comprises:
obtaining a resource allocation policy, wherein the resource allocation policy is used to determine to allocate the L second entities in the N second entities to the target user host.

5. The method according to claim 4, wherein the obtaining the resource allocation policy comprises:
obtaining a resource requirement of the target user host in the at least one user host; and
determining the resource allocation policy based on the resource requirement.

6. The method according to any one of claims 1 to 5, wherein the method further comprises:
separately configuring entity identifiers and/or permission identifiers for the at least one user host, the first entity, and the N second entities; or separately configuring entity identifiers and/or permission identifiers for the at least one user host and the N second entities.

7. The method according to any one of claims 1 to 6, wherein the first configuration information comprises one or more of the following items: globally unique identifiers, entity identifiers, or permission identifiers of the L second entities.

8. The method according to any one of claims 1 to 7, wherein the method further comprises:
sending second configuration information to the target user host, wherein the second configuration information is used to notify the target user host to deregister one or more second target entities in the L second entities.

9. The method according to claim 8, wherein the second configuration information comprises one or more of the following items: globally unique identifiers, entity identifiers, or permission identifiers of the one or more second target entities.

10. The method according to claim 8 or 9, wherein the sending the second configuration information to the target user host comprises:
when the resource allocation policy changes, sending the second configuration information to the target user host; or
when the one or more second target entities or a resource device to which the one or more second target entities belong is faulty, sending the second configuration information to the target user host.

11. The method according to any one of claims 8 to 10, wherein the method further comprises:
when the resource allocation policy changes, resetting the one or more second target entities, and invalidating the entity identifiers and/or the permission identifiers of the one or more second target entities.

12. The method according to any one of claims 1 to 11, wherein the method further comprises:
configuring a network address for the target user host; and
the sending the first configuration information to the target user host comprises:
sending the first configuration information to the target user host based on the network address of the target user host.

13. A device resource management method, applied to a target user host in a device resource management system, wherein the device resource management system comprises a management host, at least one user host, and at least one resource device, the target user host is one of the at least one user host, each of the at least one resource device comprises a first entity and at least one second entity, the first entity comprises a physical configuration resource, the at least one second entity comprises a function configuration resource generated after the physical configuration resource is configured, the at least one resource device comprises N second entities in total, N is an integer greater than 1, and the method comprises:
receiving first configuration information sent by the management host;
determining L allocated second entities based on the first configuration information, wherein the L second entities are second entities allocated from the N second entities to the target user host, and L is a positive integer less than or equal to N; and
registering the L second entities.

14. The method according to claim 13, wherein the registering the L second entities comprises:
creating local devices for the L second entities; and
loading device drivers for the local devices, and establishing communication channels from the local devices to the L second entities by using the device drivers.

15. The method according to claim 13 or 14, wherein the method further comprises:
enabling and using the L second entities.

16. The method according to any one of claims 13 to 15, wherein the method further comprises:
receiving an enumeration message sent by the management host; and
sending an enumeration response message to the management host for the enumeration message.

17. The method according to any one of claims 13 to 16, wherein the method further comprises:
receiving entity identifiers and/or permission identifiers configured by the management host.

18. The method according to any one of claims 13 to 17, wherein the method further comprises:
sending a resource requirement to the management host.

19. The method according to any one of claims 13 to 18, wherein the method further comprises:
receiving second configuration information sent by the management host;
determining one or more to-be-deregistered second target entities in the L second entities based on the second configuration information; and
deregistering the one or more second target entities.

20. The method according to claim 19, wherein the deregistering the one or more second target entities comprises:
unloading device drivers loaded for local devices, wherein the local devices are device nodes created for the one or more second target entities; and
deleting the local devices.

21. The method according to claim 19 or 20, wherein the second configuration information comprises one or more of the following items: globally unique identifiers, entity identifiers, or permission identifiers of the one or more second target entities.

22. The method according to any one of claims 13 to 21, wherein the first configuration information comprises one or more of the following items: globally unique identifiers, entity identifiers, or permission identifiers of the target user host and the L second entities.

23. A device resource management method, applied to a resource device in a device resource management system, wherein the device resource management system further comprises a management host and at least one user host, and the method comprises:
receiving an enumeration message sent by the management host, wherein the enumeration message is used to discover the at least one user host and at least one resource device in the device resource management system; and
sending an enumeration response message to the management host for the enumeration message, wherein the enumeration response message is used to report information about the resource device.

24. The method according to claim 23, wherein the enumeration response message comprises a globally unique identifier of the target resource device.

25. A device resource management system, wherein the system comprises at least one user host, at least one resource device, and a management host;
each of the at least one resource device comprises a first entity and at least one second entity, the first entity comprises a physical configuration resource, the at least one second entity comprises a function configuration resource generated after the physical configuration resource is configured, the at least one resource device comprises N second entities in total, and N is an integer greater than 1;
the management host is configured to send first configuration information to a target user host, wherein the first configuration information is used to notify the target user host to register the L second entities, the target user host is one of the at least one user host, the L second entities are second entities allocated from the N second entities to the target user host, and L is a positive integer less than or equal to N; and
the target user host is configured to receive the first configuration information, and register the L second entities based on the first configuration information.

26. The system according to claim 25, wherein the management host is further configured to:
scan the device resource management system, to discover the at least one user host and the at least one resource device.

27. The system according to claim 26, wherein the management host is specifically configured to:
send an enumeration message in the device resource management system, and receive enumeration response messages separately sent by the at least one user host and the at least one resource device for the enumeration message; and
determine the at least one user host and the at least one resource device based on the enumeration response messages; and
the at least one user host and the at least one resource device are configured to: receive the enumeration message, and send the enumeration response message to the management host for the enumeration message.

28. The system according to any one of claims 25 to 27, wherein the management host is further configured to:
obtain a resource allocation policy, wherein the resource allocation policy is used to determine to allocate the L second entities in the N second entities to the target user host.

29. The system according to claim 28, wherein the management host is specifically configured to:
obtain a resource requirement of the target user host in the at least one user host; and
determine the resource allocation policy based on the resource requirement; and
the target user host is configured to send the resource requirement to the management host.

30. The system according to any one of claims 25 to 29, wherein the system further comprises:
a switch device, configured to connect the at least one user host, the management host, and the at least one resource device.

31. The system according to any one of claims 25 to 30, wherein the management host is further configured to:
configure entity identifiers and/or permission identifiers for the at least one user host, the first entity, and the L second entities; or separately configure entity identifiers and/or permission identifiers for the at least one user host and the N second entities.

32. The system according to any one of claims 25 to 31, wherein the management host is further configured to:
send the first configuration information to the target user host, wherein the first configuration information is used to notify the target user host to register the L second entities, and the first configuration information comprises one or more of the following items: globally unique identifiers, entity identifiers, or permission identifiers of the L second entities; and
the target user host is configured to:
receive the first configuration information sent by the management host;
determine the L allocated second entities based on the first configuration information, wherein the L second entities are a part or all of the N second entities, and L is a positive integer less than or equal to N; and
register the L second entities.

33. The system according to any one of claims 25 to 32, wherein the management host is further configured to:
send second configuration information to the target user host, wherein the second configuration information is used to notify the target user host to deregister one or more second target entities in the L second entities, and the second configuration information comprises one or more of the following items: globally unique identifiers, entity identifiers, or permission identifiers of the one or more second target entities; and
the target user host is further configured to:
receive the second configuration information sent by the management host;
determine the one or more to-be-deregistered second target entities in the L second entities based on the second configuration information; and
deregister the one or more second target entities.

34. The system according to claim 33, wherein the management host is specifically configured to:
when the resource allocation policy changes, send the second configuration information to the target user host; or
when the one or more second target entities or a resource device to which the one or more second target entities belong is faulty, send the second configuration information to the target user host.

35. The system according to claim 33 or 34, wherein the management host is further configured to:
when the resource allocation policy changes, reset the one or more second target entities, and invalidate the entity identifiers and/or the permission identifiers of the one or more second target entities.

36. The system according to any one of claims 25 to 35, wherein the at least one user host, the at least one resource device, the management host, and the switch device all are configured with a network address, and the network address is used to determine transmission routing of a communication message in the system.

37. A computer-readable storage medium, comprising instructions, wherein when the instructions are run on a computer, the computer is caused to perform the method according to any one of claims 1 to 24.

38. An apparatus, comprising a module or a unit configured to perform the method according to any one of claims 1 to 24.

39. A terminal device, comprising a processor and a memory, wherein the memory is configured to store program code, and when the program code is executed by the processor, the terminal device is configured to implement the method according to any one of claims 1 to 24.

40. A chip system, wherein the chip system comprises at least one processor, a memory, and an interface circuit, the memory, the interface circuit, and the at least one processor are interconnected through a line, the at least one memory stores instructions, and when the instructions are executed by the processor, the method according to any one of claims 1 to 24 is implemented.
